(19) Europäisches Patentamt
European Patent Office
Office européen des brevets

(11) **EP 4 598 164 A1**

(12) **EUROPEAN PATENT APPLICATION**
published in accordance with Art. 153(4) EPC

(43) Date of publication:
06.08.2025 Bulletin 2025/32

(21) Application number: 23870153.6

(22) Date of filing: 31.08.2023

(51) International Patent Classification (IPC):
*H04W 64/00* (2009.01)

(52) Cooperative Patent Classification (CPC):
H04W 64/00

(86) International application number:
PCT/CN2023/116321

(87) International publication number:
WO 2024/066913 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202211218041

(71) Applicant: Datang Mobile Communications
Equipment Co., Ltd.
Beijing 100085 (CN)

(72) Inventors:
• REN, Bin
  Beijing 100085 (CN)
• DA, Ren
  Beijing 100085 (CN)
• REN, Xiaotao
  Beijing 100085 (CN)

(74) Representative: Studio Torta S.p.A.
Via Viotti, 9
10121 Torino (IT)

(54) **POSITIONING METHOD AND DEVICE**

(57) The present application provides a positioning method and apparatus for providing a positioning solution suitable for user equipment in various motion speed scenarios, ensuring positioning accuracy and avoiding a problem that positioning accuracy performance for user equipment moving at a high speed is declined. The method provided by the present application includes: acquiring positioning reference signal configuration information, where the positioning reference signal configuration information is positioning reference signal configuration information for a plurality of positioning reference signal sending entities at a plurality of moments; and receiving, according to the positioning reference signal configuration information, positioning reference signals sent by the plurality of positioning reference signal sending entities at the plurality of moments, and performing positioning measurement, where a granularity of a measurement moment is less than or equal to an orthogonal frequency division multiplexing symbol.

Acquiring positioning reference signal configuration information, where the positioning reference signal configuration information is positioning reference signal configuration information for a plurality of positioning reference signal sending entities at a plurality of moments — S101

Receiving, according to the positioning reference signal configuration information, positioning reference signals sent by the positioning reference signal sending entities at the plurality of moments, and performing a positioning measurement, where a granularity of measurement moment is less than or equal to an orthogonal frequency division multiplexing symbol — S102

FIG. 5

EP 4 598 164 A1

**Description**

**CROSS-REFERENCE TO RELATED APPLICATIONS**

This application claims priority to Chinese Patent Application No. 202211218041.9, filed to the China National Intellectual Property Administration on September 30, 2022 and entitled "POSITIONING METHOD AND APPARATUS", which is hereby incorporated by reference in its entirety.

**TECHNICAL FIELD**

The present application relates to the field of communication technology and, in particular, to a positioning method and apparatus.

**BACKGROUND**

Version 16 (Rel-16) standard of third generation partnership project (3rd Generation Partnership Project, 3GPP) supports various positioning methods that depend on a radio access technology (Radio Access Technology, RAT-dependent) of a fifth generation cellular mobile communication system (5th Generation, 5G). However, in a high-speed scenario defined by 3GPP, a unidirectional speed of user equipment (User Equipment, UE for short, also known as user terminal) can reach up to 250km/h, and the Doppler shift caused by high-speed movement will lead to a decline of positioning accuracy performance for user equipment moving at a high speed. Therefore, in the prior art, it cannot guarantee the accurate positioning of the user equipment in various motion speed scenarios.

**SUMMARY**

Embodiments of the present application provide a positioning method and apparatus for providing a positioning solution suitable for user equipment in various motion speed scenarios, ensuring positioning accuracy and avoiding a problem that positioning accuracy performance for user equipment moving at a high speed is declined.
On the side of a target UE, an embodiment of the present application provides a positioning method, including:

acquiring positioning reference signal configuration information, where the positioning reference signal configuration information is positioning reference signal configuration information for a plurality of positioning reference signal sending entities at a plurality of moments;
receiving, according to the positioning reference signal configuration information, positioning reference signals sent by the plurality of positioning reference signal sending entities at the plurality of moments, and performing positioning measurement, where a granularity of a measurement moment is less than or equal to an orthogonal frequency division multiplexing symbol.

By obtaining and according to the positioning reference signal configuration information for the plurality of positioning reference signal sending entities at the plurality of moments, receiving the positioning reference signals sent by the plurality of positioning reference signal sending entities at the plurality of moments, and performing the positioning measurement, where the granularity of the measurement moment is less than or equal to the orthogonal frequency division multiplexing symbol, it can overcome the effect of UE movement and Doppler shift on positioning accuracy, thereby improving the positioning accuracy for a terminal moving at a high speed. Furthermore, the method is suitable for the positioning of user equipment in various motion speed scenarios, ensures the positioning accuracy and avoids a problem that positioning accuracy performance for user equipment moving at a high speed is declined.
In some embodiments, the method further includes:
reporting a positioning capability of a terminal, where the positioning capability of the terminal includes one or a combination of the following information:

a type of positioning measurement quantity supported by the terminal; where the type includes a phase of arrival and/or time of arrival;
historical speed information of the terminal;
whether the terminal supports positioning measurement for one measurement sample.

In some embodiments, the performing the positioning measurement includes:

determining a number M of measurement sample, where the measurement sample is used to acquire positioning measurement quantity, M is an integer greater than or equal to 1;
acquiring the positioning measurement quantity based on the M measurement sample;
where the determining the number M of the measurement sample includes:

receiving indication information, where the indication information is used to indicate a value of the number M of the measurement sample;
or, receiving indication information, where the indication information is used to indicate information for determining a value of the number M of the measurement sample, and determining the value of the number M of the measurement sample according to the indication information.

In some embodiments, in case that a speed of the terminal is greater than a preset value, the value of the number M of the measurement sample is 1.

In some embodiments, the method further includes:

sending positioning measurement quantity and measurement quality indication information; where,
the positioning measurement quantity includes positioning measurement quantity of one or a combination of the following four types:

single differential time of arrival, single differential phase of arrival, double differential time of arrival and double differential phase of arrival;
the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;
a quality indication of the positioning measurement;
an indication of line of sight or non line of sight.

In some embodiments, the method further includes: obtaining, based on the positioning measurement, measurement quantity of differential time of arrival (TOA) and/or measurement quantity of differential phase of arrival (POA); calculating, by using preset terminal position information at a plurality of different moments in an initial search range and based on a minimization criterion of a cost function, terminal position information of a terminal at the plurality of different moments;

where the differential TOA includes single differential TOA and double differential TOA;
where the measurement quantity of the differential POA includes a single differential POA and a double differential POA.

In some embodiments, the cost function includes one of the following five kinds of cost functions:

a first kind of cost function: calculating, by using preset terminal positions at the plurality of different moments, a theoretical double differential TOA value, which includes calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities; where, j = {1: N}, j ≠ p, N represents a total number of positioning reference signal sending entities;
calculating a weighted sum of squares of differential values between the theoretical double differential TOA value and a double differential TOA value obtained by an actual measurement of the terminal; where an inverse of a weighting coefficient is a variance of a TOA measurement error, and the TOA measurement error is a preset value or is notified by the network to the terminal according to a current scene;
a second kind of cost function:, calculating, by using preset terminal positions at the plurality of different moments, a theoretical single differential TOA value, which includes calculating a theoretical single differential TOA of the terminal to any non-reference positioning reference signal sending entity j of the plurality of positioning reference signal sending entities; where, j = {1: N}, N represents a total number of positioning reference signal sending entities;
calculating a weighted sum of squares of differential values between the theoretical single differential TOA value and a single differential TOA value obtained by an actual measurement of the terminal; where an inverse of a weighting coefficient is a variance of a TOA measurement error, and the TOA measurement error is a preset value or is notified by the network to the terminal according to a current scene;

a third kind of cost function: calculating, by using preset terminal positions at the plurality of different moments, a theoretical double differential POA value, which includes calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities; where, $j = \{1: N\}$, $j \neq p$, N represents a total number of positioning reference signal sending entities;

calculating a weighted sum of squares of differential values between the theoretical double differential POA value and a double differential POA value obtained by an actual measurement of the terminal; where an inverse of a weighting coefficient is a variance of a POA measurement error, and the POA measurement error is a preset value or is notified by the network to the terminal according to a current scene;

a fourth kind of cost function: calculating, by using preset terminal positions at the plurality of different moments, a theoretical single differential POA value, which includes calculating a theoretical single differential POA of the terminal to any non-reference positioning reference signal sending entity j of the plurality of positioning reference signal sending entities; where, $j = \{1: N\}$, N represents a total number of positioning reference signal sending entities;

calculating a weighted sum of squares of differential values between the theoretical single differential POA value and a single differential POA value obtained by an actual measurement of the terminal; where an inverse of a weighting coefficient is a variance of a POA measurement error, and the POA measurement error is a preset value or is notified by the network to the terminal according to a current scene;

a fifth kind of cost function: calculating, by using preset terminal positions at the plurality of different moments, a first weighted value of squares of differential values between a theoretical double differential TOA value and a double differential TOA value obtained by an actual measurement of the terminal; where an inverse of a weighting coefficient is a variance of a TOA measurement error, and the TOA measurement error is a preset value or is notified by the network to the terminal according to a current scene;

and calculating, by using preset terminal positions at the plurality of different moments, a second weighted value of squares of difference values between a theoretical double differential POA value and a double differential POA value obtained by the actual measurement of the terminal; where an inverse of a weighting coefficient is a variance of a POA measurement error, and the POA measurement error is a preset value or is notified by the network to the terminal according to a current scene;

and calculating an accumulated sum of the first weighted value of squares and the second weighted value of squares;

where the calculating the theoretical double differential TOA value includes: calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities;

the calculating the theoretical double differential POA value includes: calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities; where, $j = \{1: N\}$, $j \neq p$, N represents a total number of positioning reference signal sending entities.

On the side of a positioning management functional entity, an embodiment of the present application provides a positioning method, including:

negotiating with a plurality of positioning reference signal sending entities to determine positioning reference signal configuration information, where the positioning reference signal configuration information is positioning reference signal configuration information for the plurality of positioning reference signal sending entities at a plurality of moments;

sending the positioning reference signal configuration information for a terminal to receive, according to the positioning reference signal configuration information, positioning reference signals sent by the plurality of positioning reference signal sending entities at the plurality of moments and perform positioning measurement, where a granularity of a measurement moment is less than or equal to an orthogonal frequency division multiplexing symbol.

In some embodiments, the method further includes:
receiving a positioning capability of a terminal, where the positioning capability includes one or a combination of the following information:

a type of positioning measurement quantity supported by the terminal; where the type includes a phase of arrival and/or time of arrival;
historical speed information of the terminal;

whether the terminal supports positioning measurement for one measurement sample.

In some embodiments, among the positioning reference signal configuration information, positions of time domain resources of positioning reference signals of the plurality of positioning reference signal sending entities at a same moment of the plurality of moments are identical or adjacent or differ in a preset range.

In some embodiments, the method further includes:
sending indication information, where the indication information indicates a value of a number M of measurement sample, or the indication information indicates information for determining the value of the number M of the measurement sample.

In some embodiments, in case that a speed of the terminal is greater than a preset value, the value of the number M of the measurement sample is 1.

In some embodiments, the method further includes:

receiving positioning measurement quantity and measurement quality indication information sent by the terminal; where,

the positioning measurement quantity includes positioning measurement quantity of one or a combination of the following four types:

single differential time of arrival, single differential phase of arrival, double differential time of arrival and double differential phase of arrival;

the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;

a quality indication of the positioning measurement;

an indication of line of sight or non line of sight.

In some embodiments, the method further includes:
calculating, based on the positioning measurement quantity and by using preset terminal position information at a plurality of different moments in an initial search range, terminal position information of the terminal at the plurality of different moments based on a minimization criterion of a cost function.

In some embodiments, the cost function includes one of the following five kinds of cost functions:

a first kind of cost function: calculating, by using preset terminal positions at the plurality of different moments, a theoretical double differential TOA value, which includes calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities; where, j = {1: N}, j ≠ p, N represents a total number of positioning reference signal sending entities;

calculating a weighted sum of squares of differential values between the theoretical double differential TOA value and a double differential TOA value obtained by an actual measurement of the terminal; where an inverse of a weighting coefficient is a variance of a TOA measurement error, and the TOA measurement error is a preset value or is notified by the network to the terminal according to a current scene;

a second kind of cost function:, calculating, by using preset terminal positions at the plurality of different moments, a theoretical single differential TOA value, which includes calculating a theoretical single differential TOA of the terminal to any non-reference positioning reference signal sending entity j of the plurality of positioning reference signal sending entities; where, j = {1: N}, N represents a total number of positioning reference signal sending entities;

calculating a weighted sum of squares of differential values between the theoretical single differential TOA value and a single differential TOA value obtained by an actual measurement of the terminal; where an inverse of a weighting coefficient is a variance of a TOA measurement error, and the TOA measurement error is a preset value or is notified by the network to the terminal according to a current scene;

a third kind of cost function: calculating, by using preset terminal positions at the plurality of different moments, a theoretical double differential POA value, which includes calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities; where, j = {1: N}, j ≠ p, N represents a total number of positioning reference signal sending entities;

calculating a weighted sum of squares of differential values between the theoretical double differential POA value and a double differential POA value obtained by an actual measurement of the terminal; where an inverse of a weighting coefficient is a variance of a POA measurement error, and the POA measurement error is a preset value or is notified by the network to the terminal according to a current scene;

a fourth kind of cost function: calculating, by using preset terminal positions at the plurality of different moments, a theoretical single differential POA value, which includes calculating a theoretical single differential POA of the terminal to any non-reference positioning reference signal sending entity j of the plurality of positioning reference signal sending entities; where, j = {1: N}, N represents a total number of positioning reference signal sending entities; calculating a weighted sum of squares of differential values between the theoretical single differential POA value and a single differential POA value obtained by an actual measurement of the terminal; where an inverse of a weighting coefficient is a variance of a POA measurement error, and the POA measurement error is a preset value or is notified by the network to the terminal according to a current scene;

a fifth kind of cost function: calculating, by using preset terminal positions at the plurality of different moments, a first weighted value of squares of differential values between a theoretical double differential TOA value and a double differential TOA value obtained by an actual measurement of the terminal; where an inverse of a weighting coefficient is a variance of a TOA measurement error, and the TOA measurement error is a preset value or is notified by the network to the terminal according to a current scene;

and calculating, by using preset terminal positions at the plurality of different moments, a second weighted value of squares of difference values between a theoretical double differential POA value and a double differential POA value obtained by the actual measurement of the terminal; where an inverse of a weighting coefficient is a variance of a POA measurement error, and the POA measurement error is a preset value or is notified by the network to the terminal according to a current scene;

and calculating an accumulated sum of the first weighted value of squares and the second weighted value of squares; where the calculating the theoretical double differential TOA value includes: calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities; the calculating the theoretical double differential POA value includes: calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities; where, j = {1: N}, j ≠ p, N represents a total number of positioning reference signal sending entities.

On the side of a positioning reference signal sending entity, an embodiment of the present application provides a positioning method, including:

negotiating with a positioning management functional entity to determine positioning reference signal configuration information, where the positioning reference signal configuration information is positioning reference signal configuration information for a plurality of positioning reference signal sending entities at a plurality of moments;

sending positioning reference signals to a terminal at the plurality of moments, respectively, for the terminal to receive, according to the positioning reference signal configuration information, the positioning reference signals sent at the plurality of moments and perform positioning measurement, where a granularity of a measurement moment is less than or equal to an orthogonal frequency division multiplexing symbol.

In some embodiments, among the positioning reference signal configuration information, positions of time domain resources of positioning reference signals of the plurality of positioning reference signal sending entities at a same moment of the plurality of moments are identical or adjacent or differ in a preset range.

On the side of a target UE, an embodiment of the present application provides a positioning apparatus, including a memory, a transceiver and a processor:

the memory is configured to store a computer program; the transceiver is configured to transmit and receive data under control of the processor; the processor is configured to read the computer program in the memory and perform the following operations:

acquiring positioning reference signal configuration information, where the positioning reference signal configuration information is positioning reference signal configuration information for a plurality of positioning reference signal sending entities at a plurality of moments;

receiving, according to the positioning reference signal configuration information, positioning reference signals sent by the plurality of positioning reference signal sending entities at the plurality of moments, and performing positioning measurement, where a granularity of a measurement moment is less than or equal to an orthogonal frequency division multiplexing symbol.

In some embodiments, the processor is further configured to read the computer program in the memory and perform the following operations:
reporting a positioning capability of a terminal, where the positioning capability of the terminal includes one or a combination of the following information:

a type of positioning measurement quantity supported by the terminal; where the type includes a phase of arrival and/or time of arrival;
historical speed information of the terminal;
whether the terminal supports positioning measurement for one measurement sample.

In some embodiments, the performing the positioning measurement includes:

determining a number M of measurement sample, where the measurement sample is used to acquire positioning measurement quantity, M is an integer greater than or equal to 1e;
acquiring the positioning measurement quantity based on the M measurement sample;
where, the determining the number M of the measurement sample, where the measurement sample is used to acquire the positioning measurement quantity includes:

receiving indication information, where the indication information is used to indicate a value of the number M of the measurement sample;
or, receiving indication information, where the indication information is used to indicate information for determining a value of the number M of the measurement sample, and determining the value of the number M of the measurement sample according to the indication information.

In some embodiments, in case that a speed of the terminal is greater than a preset value, the value of the number M of the measurement sample is 1.

In some embodiments, the processor is further configured to read the computer program in the memory and perform the following operations:

sending positioning measurement quantity and measurement quality indication information; where,
the positioning measurement quantity includes positioning measurement quantity of one or a combination of the following four types:

single differential time of arrival, single differential phase of arrival, double differential time of arrival and double differential phase of arrival;
the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;
a quality indication of the positioning measurement;
an indication of line of sight or non line of sight.

In some embodiments, the processor is further configured to read the computer program in the memory and perform the following operations:

obtaining, based on the positioning measurement, measurement quantity of differential time of arrival (TOA) and/or measurement quantity of differential phase of arrival (POA); calculating, by using preset terminal position information at a plurality of different moments in an initial search range and based on a minimization criterion of a cost function, terminal position information of a terminal at the plurality of different moments;
where the differential TOA includes single differential TOA and double differential TOA;
where the measurement quantity of the differential POA includes a single differential POA and a double differential POA.

On the side of an LMF entity, an embodiment of the present application provides a positioning apparatus, including a memory, a transceiver and a processor:

the memory is configured to store a computer program; the transceiver is configured to transmit and receive data under control of the processor; the processor is configured to read the computer program in the memory and perform the following operations:

negotiating with a plurality of positioning reference signal sending entities to determine positioning reference signal configuration information, where the positioning reference signal configuration information is positioning reference signal configuration information for the plurality of positioning reference signal sending entities at a plurality of moments;

sending the positioning reference signal configuration information for a terminal to receive, according to the positioning reference signal configuration information, positioning reference signals sent by the plurality of positioning reference signal sending entities at the plurality of moments and perform positioning measurement, where a granularity of a measurement moment is less than or equal to an orthogonal frequency division multiplexing symbol.

In some embodiments, the processor is further configured to read the computer program in the memory and perform the following operations:

receiving a positioning capability of a terminal, where the positioning capability includes one or a combination of the following information:

a type of positioning measurement quantity supported by the terminal; where the type includes a phase of arrival and/or time of arrival;

historical speed information of the terminal;

whether the terminal supports positioning measurement for one measurement sample.

In some embodiments, among the positioning reference signal configuration information, positions of time domain resources of positioning reference signals of the plurality of positioning reference signal sending entities at a same moment of the plurality of moments are identical or adjacent or differ in a preset range.

In some embodiments, the processor is further configured to read the computer program in the memory and perform the following operations:

sending indication information, where the indication information indicates a value of a number M of measurement sample, or the indication information indicates information for determining the value of the number M of the measurement sample.

In some embodiments, in case that a speed of the terminal is greater than a preset value, the value of the number M of the measurement samples is 1.

In some embodiments, the processor is further configured to read the computer program in the memory and perform the following operations:

receiving positioning measurement quantity and measurement quality indication information sent by the terminal; where,

the positioning measurement quantity includes positioning measurement quantity of one or a combination of the following four types:

single differential time of arrival, single differential phase of arrival, double differential time of arrival and double differential phase of arrival;

the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;

a quality indication of the positioning measurement;

an indication of line of sight or non line of sight.

In some embodiments, the processor is further configured to read the computer program in the memory and perform the following operations:

calculating, based on the positioning measurement quantity and by using preset terminal position information at a plurality of different moments in an initial search range, terminal position information of the terminal at the plurality of different moments based on a minimization criterion of a cost function.

On the side of a positioning reference signal sending entity, an embodiment of the present application provides a positioning apparatus, including a memory, a transceiver and a processor:

the memory is configured to store a computer program; the transceiver is configured to transmit and receive data under control of the processor; the processor is configured to read the computer program in the memory and perform the following operations:

negotiating with a positioning management functional entity to determine positioning reference signal configuration information, where the positioning reference signal configuration information is positioning reference signal configuration information for a plurality of positioning reference signal sending entities at a plurality of moments; sending positioning reference signals to a terminal at the plurality of moments, respectively, for the terminal to receive, according to the positioning reference signal configuration information, the positioning reference signals sent at the plurality of moments and perform positioning measurement, where a granularity of a measurement moment is less than or equal to an orthogonal frequency division multiplexing symbol.

In some embodiments, among the positioning reference signal configuration information, positions of time domain resources of positioning reference signals of the plurality of positioning reference signal sending entities at a same moment of the plurality of moments are identical or adjacent or differ in a preset range.

On the side of a target UE, an embodiment of the present application provides another positioning apparatus, including:

an acquisition positioning reference signal configuration unit, configured to acquire positioning reference signal configuration information, where the positioning reference signal configuration information is positioning reference signal configuration information for a plurality of positioning reference signal sending entities at a plurality of moments; a positioning measurement unit, configured to receive, according to the positioning reference signal configuration information, positioning reference signals sent by the plurality of positioning reference signal sending entities at the plurality of moments, and perform positioning measurement, where a granularity of a measurement moment is less than or equal to an orthogonal frequency division multiplexing symbol.

On the side of a positioning management functional entity, an embodiment of the present application provides another positioning apparatus, including:

a positioning reference signal configuration negotiation unit, configured to negotiate with a plurality of positioning reference signal sending entities to determine positioning reference signal configuration information, where the positioning reference signal configuration information is positioning reference signal configuration information for the plurality of positioning reference signal sending entities at a plurality of moments; a positioning reference signal configuration sending unit, configured to send the positioning reference signal configuration information for a terminal to receive, according to the positioning reference signal configuration information, positioning reference signals sent by the plurality of positioning reference signal sending entities at the plurality of moments and perform positioning measurement, where a granularity of a measurement moment is less than or equal to an orthogonal frequency division multiplexing symbol.

On the side of a positioning reference signal sending entity, an embodiment of the present application provides another positioning apparatus, including:

a positioning reference signal configuration negotiation unit, configured to negotiate with a positioning management functional entity to determine positioning reference signal configuration information, where the positioning reference signal configuration information is positioning reference signal configuration information for a plurality of positioning reference signal sending entities at a plurality of moments; a positioning reference signal sending unit, configured to send positioning reference signals to a terminal at the plurality of moments, respectively, for the terminal to receive, according to the positioning reference signal configuration information, the positioning reference signals sent at the plurality of moments and perform positioning measurement, where a granularity of a measurement moment is less than or equal to an orthogonal frequency division multiplexing symbol.

Another embodiment of the present application provides a processor-readable storage medium, where the processor-readable storage medium stores a computer program, and the computer program is used to cause a processor to execute any of the above methods.

## BRIEF DESCRIPTION OF DRAWINGS

In order to explain technical solutions in embodiments of the present application more clearly, the drawings that need to be used in the description of the embodiments will be briefly introduced in the following. Obviously, the drawings in the following description are some embodiments of the present disclosure, and for those of ordinary skill in the art, other drawings can be obtained according to these drawings without paying creative effort.

FIG. 1 is a schematic diagram of round trip time (RTT) of a signal provided by an embodiment of the present application.

FIG. 2 is a schematic diagram of a general solution provided by an embodiment of the present application.

FIG. 3 is a schematic diagram of a $\overline{dd}_{jp}$ calculation principle provided by an embodiment of the present application.

FIG. 4 is a schematic diagram of a $\overline{dd}_{jp}(x_1,y_1,x_2,y_2)$ calculation principle provided by an embodiment of the present application.

FIG. 5 is a flowchart of a positioning method on the side of a PRS receiving entity provided by an embodiment of the present application.

FIG. 6 is a flowchart of a positioning method on the side of an LMF provided by an embodiment of the present application.

FIG. 7 is a flowchart of a positioning method on the side of a PRS sending entity provided by an embodiment of the present application.

FIG. 8 is a schematic structural diagram of a positioning apparatus on the side of a terminal provided by an embodiment of the present application.

FIG. 9 is a schematic structural diagram of a positioning apparatus on the side of a network provided by an embodiment of the present application.

FIG. 10 is a schematic structural diagram of a positioning apparatus on the side of a PRS receiving entity provided by an embodiment of the present application.

FIG. 11 is a schematic structural diagram of a positioning apparatus on the side of an LMF provided by an embodiment of the present application.

FIG. 12 is a schematic structural diagram of a positioning apparatus on the side of a PRS sending entity provided by an embodiment of the present application.

## DESCRIPTION OF EMBODIMENTS

In embodiments of the present application, the term "and/or" describes an association relationship of associated objects, indicating that there may be three kinds of relationships. For example, A and/or B can indicate three cases, i.e., A exists alone, A and B exist at the same time, and B exists alone. The character "/" generally indicates that associated objects before and after the character is of an "OR" relationship.

In embodiments of the present application, the term "plurality" refers to two or more, and other quantifiers are similar.

The technical solutions in the embodiments of the present application will be described clearly and comprehensively with reference to the drawings in the embodiments of the present application. Obviously, the described embodiments are only some of the embodiments of the present application, rather than all of them. Based on the embodiments in the present application, all other embodiments obtained by those of ordinary skill in the art without creative effort belong to the protection scope of the present application.

Embodiments of the present application provide a positioning method and apparatus for providing a positioning solution suitable for user equipment in various motion speed scenarios, ensuring positioning accuracy and avoiding a problem that positioning accuracy performance for user equipment moving at a high speed is declined.

The method and the apparatus are based on the same application concept, and since the method and the apparatus solve the problem based on similar principles, the implementations of the apparatus and the method can be referred to each other, and the repetition is not described here.

The terms "first", "second" and so on (if any) in the description and claims of the present application as well as the above drawings are used to distinguish similar objects, and are not necessarily used to describe a specific order or sequence. It should be understood that the data so used may be interchanged where appropriate, so that the embodiments described here can be implemented in an order other than that illustrated or described here. Furthermore, the terms "including" and "having" and any variations thereof are intended to cover non-exclusive inclusion, for example, a process, a method, a system, a product or a device that includes a series of steps or units is not necessarily limited to those explicitly listed, but may include other steps or units not explicitly listed or inherent to such process, method, product or device.

The following examples and embodiments will be understood as illustrative examples only. Although this specification may refer to "a", "one" or "some" examples or embodiments in several places, it does not mean that every such reference is related to the same example or embodiment, nor does it mean that this feature is only applicable to a single example or embodiment. Individual features of different embodiments may also be combined to provide other embodiments. In addition, terms such as "including" and "containing" should be understood as not limiting the described embodiment to being consist of only those features that have been mentioned. Such examples and embodiments may also include features, structures, units, modules, etc. that are not specifically mentioned.

The technical solution provided by the embodiments of the present application can be applied to various systems, especially the 5G system. For example, the applicable system may be a global system for mobile communications (Global System of Mobile Communication, GSM), a code division multiple access (Code Division Multiple Access, CDMA) system, a wideband code division multiple access (Wideband Code Division Multiple Access, WCDMA) general packet radio service (General Packet Radio Service, GPRS) system, a long-term evolution (Long Term Evolution, LTE) system, an LTE frequency division duplex (Frequency Division Duplex, FDD) system, an LTE time division duplex (Time Division Duplex, TDD), a long term evolution advanced (Long Term Evolution Advanced, LTE-A) system, a universal mobile system (Universal Mobile Telecommunication System, UMTS), a worldwide interoperability for microwave access (Worldwide interoperability for Microwave Access, WiMAX) system, a 5G new radio (New Radio, NR) system, etc. These systems all include a terminal device and a network device. The system may also include a core network part, such as an evolved packet system (Evolved Packet System, EPS), a 5G system (5GS), etc.

The terminal device related to the embodiments of the present application may be a device that provides voice and/or data connectivity to a user, a handheld device with a wireless connection function, or other processing devices connected to a wireless modem, etc. In different systems, names of the terminal devices may be different. For example, in a 5G system, the terminal device may be called as user equipment (User Equipment, UE). The wireless terminal device can communicate with one or more core networks (core networks, CN) via RAN. The wireless terminal device may be a mobile terminal device such as a mobile phone (or called as a "cellular" phone), and a computer with a mobile terminal device such as a portable, pocket-sized, hand-held, computer-built or vehicle-mounted mobile device, which exchanges language and/or data with the radio access network, for example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), which is not limited in the embodiments of the present application.

The network device related to the embodiments of the present application may be a base station, and the base station may include a plurality of cells. According to different specific applications, a base station may also be referred to as an access point, or may be a device in an access network that communicates with a wireless terminal device through one or more sectors over an air interface, or may have other names. The network device can be used to interchange received air frames with Internet Protocol (Internet Protocol, IP) packets, and act as a router between the wireless terminal device and the rest of the access network, where the rest of the access network may include an Internet Protocol (IP) communication network. The network device can also coordinate attribute management of the air interface. For example, the network device related to the embodiments of the present application may be a network device (Base Transceiver Station, BTS) in a global system for mobile communications (GSM) or code division multiple access (CDMA); may also be a network device (Node B) in wide-band code division multiple access (WCDMA), or an evolutional network device (evolutional Node B, eNB or e-NodeB) in a long-term evolution (LTE) system, a 5G base station in a 5G network architecture (next generation system); and may further be a home evolved Node B (Home evolved Node B, HeNB), a relay node (relay node), a home base station (femto), a pico base station (pico), etc., which are not limited in the embodiments of the present application. In some network structures, the network device may include a centralized unit (centralized unit, CU) node and a distributed unit (distributed unit, DU) node, and a centralized unit and a distributed unit may also be geographically separated.

One or more antennas can be used for each of the network device and the terminal device therebetween for multi-input multi-output (Multi Input Multi Output, MIMO) transmission. The MIMO transmission may be single user MIMO (Single User MIMO, SU-MIMO) or multiple user MIMO (Multiple User MIMO, MU-MIMO). According to shape and number of root antenna combinations, the MIMO transmission may be 2D-MIMO, 3D-MIMO, FD-MIMO or massive-MIMO, and may also be diversity transmission or precoding transmission or beamforming transmission, etc.

Various embodiments of the present application will be described in detail below in conjunction with the drawings of the description. It should be noted that the presentation order of the embodiments in the present application only represents the sequence of the embodiments, and does not represent the advantages and disadvantages of the technical solutions provided by the embodiments.

Positioning methods in the 5G technology includes:

downlink-time difference of arrival (Downlink-Time Difference of Arrival, DL-TDOA);
uplink-time difference of arrival (Uplink-Time Difference of Arrival, UL-TDOA);
multiple cell-round trip time (Multiple cell-Round Trip Time, Multi-RTT)
uplink-angle of arrival (Uplink-Angle of Arrival, UL-AoA);

downlink-angle of departure (Downlink-Angle of Departure, DL-AoD);
enhanced-cell identification (Enhanced-Cell Identification, E-CID).

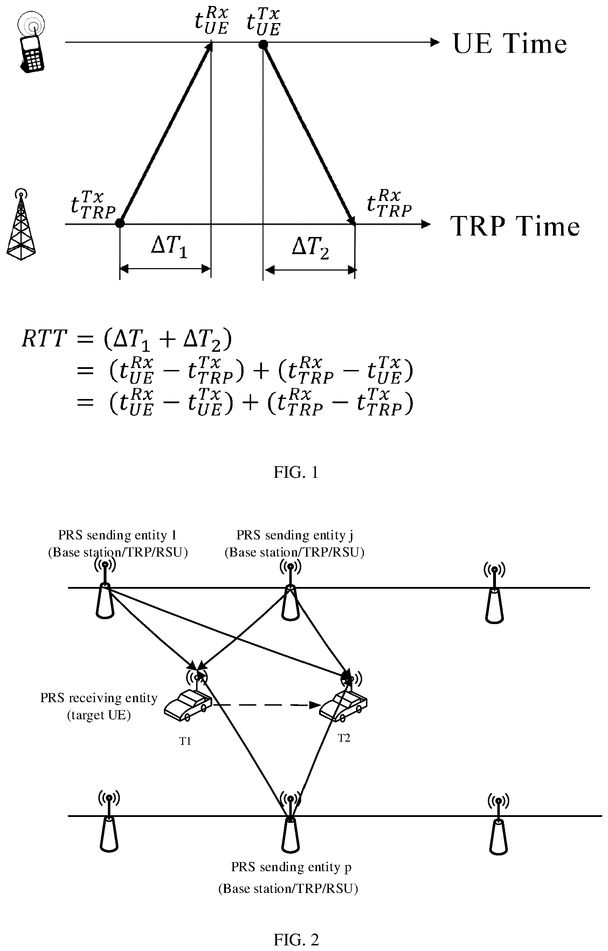

For Multi-RTT as a newly introduced positioning method, the basic principle is shown in FIG. 1. The two positioning measurement quantities (measurement quantities for short) used in the Multi-RTT positioning method are as follows:

1) a time difference measured by UE (referred to UE Rx-Tx time difference), between time of arrival of a downlink (Downlink, DL) positioning reference signal (Positioning Reference Signal, PRS) from each transmission and reception point (Transmission and Reception Point, TRP) and time of SRS-POS (Sounding Reference Signal for Positioning, uplink sounding reference signal for positioning) sent by the UE;
2) a time difference measured by each TRP (referred to gNB Rx-Tx time difference), between time of arrival of SRS-Pos from UE and time of DL PRS sent by the TRP.

As shown in FIG. 1, the round trip time (Round Trip Time, RTT) of a signal between UE and any TRP may be obtained by adding the UE Rx-Tx time difference ( $t_{UE}^{Rx} - t_{UE}^{Tx}$ ) measured by the UE to the gNB Rx-Tx time difference ( $t_{TRP}^{Rx} - t_{TRP}^{Tx}$ ) measured by the TRP. A distance between the UE and the TRP may be obtained by multiplying 1/2 RTT by the speed of light.

However, since measurement quantities of RTT positioning are not acquired at the same time, within an RTT delay (i.e., UE Rx-Tx time difference plus gNB Rx-Tx time difference) shown in FIG. 1, a high-speed movement of the UE will change the position of the UE, resulting in a positioning error. Under a given condition of RTT delay, the higher the motion speed of UE, the greater the positioning error. Assuming that a PRS period is 5ms, and RTT positioning is performed by a measurement quantity of M measurement samples obtained in M=4 PRS periods, a time delay of RTT measurement is 20 ms. For the positioning of UE moving at a high speed with a speed of 250km/h, the change of the relative position of UE can reach 1.4 meters in 20 ms. If the problem caused by the relative speed of UE (i.e., Doppler shift) is not solved, it is possible to introduce a positioning error of 1.4 meters.

The traditional TDOA method is also difficult to obtain meter-level positioning accuracy performance. Similar to RTT positioning, the problem caused by the relative speed of UE (Doppler shift) should also be solved. One measurement report contains one or more measurement examples (or referred to as measurement samples), and each UE measurement sample is associated with a time stamp (Time stamp), where the granularity of the Time stamp is a time slot.

Regarding the measurement samples, for example, PRS resources are repeatedly transmitted twice in an 80ms period, and each PRS transmission is referred to a measurement sample, that is, two measurement samples are contained in 80 ms. For positioning measurement quantity that supports M (M>1) measurement samples, assuming M=4, it means that a PRS receiver, by using an algorithm such as averaging or linear weighting, performs a processing on the M=4 measurement samples to obtain one positioning measurement quantity. Since a typical time interval of M=4 measurement samples is on a scale of ten milliseconds, a relatively large error will be introduced in a scenario of high-speed movement of UE. In addition, the traditional TDOA positioning method requires accurate time synchronization between TRPs, and inaccuracy of the time synchronization between TRPs (i.e., there is a positioning error) will directly influence the positioning performance of traditional TDOA.

To sum up, in the scenario of high-speed movement of UE, the Doppler shift brought by high-speed will lead to a greater loss of positioning accuracy (including absolute positioning or relative positioning) in RTT positioning and TDOA positioning. At present, the 3GPP protocol has not considered how to overcome the influence of UE motion and Doppler shift on positioning accuracy.

An embodiment of the present application provides a joint positioning method based on measurement quantities at different moments, which can solve a problem of a decline of positioning accuracy performance due to large Doppler shift.

A positioning method provided by an embodiment of the present application includes the following contents.

1) Positioning measurement quantity and measurement quality indication information are provided for the joint positioning method.
The measurement quality indication information includes: information of an absolute or relative moment corresponding to the positioning measurement quantity. A granularity of a measurement moment is less than or equal to an orthogonal frequency division multiplexing (Orthogonal Frequency Division Multiplexing, OFDM) symbol, that is, the granularity of the measurement moment includes an OFDM symbol or a sampling value point, where the sampling value point Ts=1/fs, and fs represents a sampling rate. For example, for a 100MHz signal bandwidth, a typical sampling rate fs is 122.88MHz, and Ts = 1/Fs = 1/122.88 M = 8.14 ns.

2) For high-speed UE information, by introducing a negotiation mechanism between a location management function (Location Management Function, LMF) entity and a PRS sending entity, the LMF requests the PRS sending entity to configure PRS resources of number N of PRS sending entities in a closest possible time range (for example, be configured in a preset time range, and a specific time range may be determined according to actual needs), and configure the UE to perform positioning measurement based on M=1 measurement sample.

A network architecture provided by an embodiment of the present application, as shown in FIG. 2, includes a PRS transmitting entity, a PRS receiving entity, and an LMF entity (not shown in FIG. 2).

The PRS sending entity in the embodiment of the present application is, for example, a base station, a TRP, a road side unit (Road Side Unit, RSU), an anchor (anchor) UE, etc.

The PRS receiving entity in the embodiment of the present application is also referred to as a target UE, that is, a terminal that needs to be positioned.

The LMF entity in the embodiment of the present application is responsible for negotiating with the PRS sending entities to determine positioning reference signal configuration information for a plurality of positioning reference signal sending entities at a plurality of moments, and obtaining positioning measurement quantity and measurement quality indication information reported by the target UE in a UE-assisted (UE-assisted) positioning method, so as to position the target UE. In the UE-based (UE-based) positioning method, the target UE positions a local UE according to the positioning measurement quantity and the measurement quality indication information.

The technical solution provided by the embodiment of the application can overcome the influence of UE motion and Doppler shift on positioning accuracy, and is suitable for various scenarios of high-speed, medium-speed and low-speed movement of UE, and is also suitable for the downlink UE-assisted (UE-assisted) positioning method and the UE-based (UE-based) positioning method. Where UE-based positioning includes Uu (an interface between a terminal and a base station) positioning and Sidelink (a direct communication link between a terminal and a terminal, SL for short) positioning. PRS includes new radio (New Radio, NR) PRS, SL PRS and other signals.

The technical solutions provided by the embodiment of the present application are specifically described below from different sides of entities, respectively.

The positioning method on the side of a target UE (i.e., a PRS receiving entity, that is, a target terminal that needs to be positioned) includes, for example the following step.

Step 1: the target UE reports positioning capability of the UE.

The positioning capability of the UE includes but is not limited to one or a combination of the following information:

a type of positioning measurement quantity supported by the UE; where the type includes POA (Phase of Arrival, phase of arrival) and/or TOA (Time of Arrival, time of arrival), etc.;

historical speed information (including a speed range and a speed direction, etc.) estimated and stored by the UE itself;

whether the UE supports positioning measurement capacity for M=1 measurement sample;

positioning capability of the UE defined by existing standards, including a supported PRS receiving bandwidth and a number of positioning frequency layers.

Step 2: the target UE receives PRS configuration information for a number N of PRS sending entities at K moments notified by LMF or other anchor (anchor) UE. Where N and K are preset integers greater than 1. Each PRS sending entity sends PRS signals at K moments, and PRS configuration information of different PRS sending entities may be different.

The PRS configuration information includes a time-frequency resource, a repetition period and a transmission timestamp of PRS;

notification signaling for notifying the PRS configuration information may adopt LPP or SLPP signaling. For an NR Uu interface (an interface between UE and a base station) the PRS includes: an NR PRS signal, an NR synchronization signal block (Synchronization Signal/PBCH Block, SSB) signal and an NR channel state indication-reference signal (Channel State Indication-Reference Signal, CSI-RS) etc., and the notification signaling is LPP signaling. For a Sidelink PC5 interface (interface between terminals) the PRS includes a SL PRS signal, and the notification signaling is SLPP signaling.

In some embodiments, for the UE-assisted (UE-assisted) positioning method, the UE will also receive an instruction, notified by the LMF, that M measurement samples are used to acquire the positioning measurement quantity, For example, for high-speed UE, indicating the positioning measurement quantity with M=1 measurement sample; for medium-low speed or static UE, indicating the positioning measurement quantity with M=4 or 2 or 1 measurement sample.

In some embodiments, for the UE-based (UE-based) positioning method, the UE will use coordinate information of the number N of PRS sending entities notified by the LMF or other anchor (anchor) UE for subsequent positioning resolving. In some embodiments, the UE may also receive historical speed information for the UE (including a speed range and a speed direction, etc.) pre-stored by the LMF, or historical speed information of all UE within the PRS sending entity range pre-stored by the LMF. According to the information notified by the network side, the UE may determine the positioning measurement quantity with M measurement samples. For example, if the local UE is determined to be high-speed UE, the positioning measurement quantity with M=1 measurement sample is adopted; and if the local UE is determined to be medium-low speed or static UE, the positioning measurement quantity with M=4 or 2 or 1 measurement sample is adopted.

The specific speed ranges of high-speed UE, medium-speed UE and low-speed UE mentioned in the embodiment of the present application may be determined according to actual needs, and is not limited in the embodiment of the present application.

Step 3: the target UE receives and measures PRS signals of the number N of PRS sending entities at K moments, and acquires positioning measurement quantity, including a time delay measurement quantity and/or a phase measurement quantity. Where, for example, N>=4, K>=2.

The UE performs the positioning measurement according to the number M of measurement samples indicated by the network (corresponding to the UE-assisted positioning method) or the number M of measurement samples determined by itself (corresponding to the UE-based positioning method).

Step 4: the following step A is executed in case of UE-assisted downlink positioning and the following step B is executed in case of UE-based downlink positioning.

Step A: the target UE reports the positioning measurement quantity and measurement quality indication information to the LMF or other anchor (anchor) UE.

For an NR Uu interface, the signaling for reporting the positioning measurement quantity and the measurement quality indication information is LPP signaling. For a Sidelink PC5 interface, the signaling for reporting the positioning measurement quantity and the measurement quality indication information is SLPP signaling.

The positioning measurement quantity reported by the UE includes but is not limited to one or a combination of the following four types:

a single differential (Single Differential, SD) time of arrival (Time of Arrival, TOA) value: $sd_j$, for the specific calculation, see for example formula (3) in the following contents;

an SD phase of arrival (Phase of Arrival, POA) value: $sd_j^{POA}$, for the specific calculation, see for example formula (11) in the following contents;

a double differential (Double Differential, DD) TOA value: $dd_{jp}$, for the specific calculation, see for example formula (2) in the following contents;

a DD POA value: $dd_{jp}^{POA}$, for the specific calculation, see for example formula (10) in the following contents.

The measurement quality indication information reported by the UE includes but is not limited to one or a combination of the following information:

an absolute moment or a relative moment corresponding to the positioning measurement quantity: the granularity is less than or equal to an OFDM symbol, and the granularity includes the OFDM symbol or a sampling value point;
a quality indication of the positioning measurement, for example: a maximum value, an average value, a variance, a mean square error, other statistics (e.g., second/third order variance, or error values corresponding to 50%, 80%, or 90% of distribution points) of an error of the positioning measurement quantity, and a resolution of the error;
an indication of LOS (Line of Sight, Line of Sight) or NLOS (Non Line of Sight, Non Line of Sight).

Step B: the target UE uses one of the following five kinds of joint search methods to resolve UE positions at K (K>=2) moments.

In the following, K=2 moments (e.g., represented by T2 moment and T1 moment, respectively) will be taken as an example for explanation, and ditto for the case of K > 2, which will not be repeated.

The joint search method described in the embodiment of the present application is to find a position $(\tilde{x}_1,\tilde{y}_1)$ of the UE at the T1 moment and a position $(\tilde{x}_2,\tilde{y}_2)$ of the UE at the T2 moment in the case of minimization of the value of the cost function, so as to determine the position of the UE at each of the k moments.

Case 1, the UE positions at K (K>=2) moments are resolved by using a first kind of cost function:

the first kind of cost function is to, assuming that the UE is within an initial search range {$UE(x_1,y_1)$, $UE(x_2,y_2)$}, i.e., assuming that the UE is located in position $(x_1,y_1)$ at T1 moment and in position $(x_2,y_2)$ at T2 moment, minimize a weighted sum of squares of a difference between a theoretical double differential TOA value $\overline{dd}_{jp}(x_1,y_1,x_2,y_2)$ from the UE to any TRP j (non-reference TRP) and from the UE to TRP p (reference TRP) and an actually measured double differential TOA value $dd_{jp}$ from T1 moment to T2 moment. For example, the following formula (1) is specifically used

for the calculation.

$$(\tilde{x}_1, \tilde{y}_1, \tilde{x}_2, \tilde{y}_2) = \min_{(x_1, y_1, x_2, y_2)} \sum_{j=1, j \neq p}^{N} \frac{(\overline{dd}_{jp}(x_1, y_1, x_2, y_2) - dd_{jp})^2}{\sigma_j^2} \qquad (1)$$

where, the p-th PRS sending entity is a reference PRS sending entity (pre-configured), p is an element in {1: N}, and c is the speed of light (in meters per second);

$\overline{dd}_{jp}(x_1, y_1, x_2, y_2)$ represents, assuming that the UE is located in position $(x_1, y_1)$ at T1 moment and in position $(x_2, y_2)$ at T2 moment, a theoretical double differential TOA value from the UE to TRP j (j = {1: N}, j ≠ p) and from the UE to TRP p, where the theoretical double differential TOA value is a preset value, i.e., a theoretical double differential TOA value between the TRP j and the TRP p, and between T1 moment and T2 moment);

$dd_{jp}$ represents an actually measured double differential TOA value for the TRP j and the reference TRP p introduced due to UE motion from T1 moment to T2 moment.

$\sigma_j^2$ represents a variance of a TOA measurement error, which may be a preset value or notified by the network to the target UE according to the current scene.

$(\tilde{x}_1, \tilde{y}_1, \tilde{x}_2, \tilde{y}_2)$ represents a finally calculated position $(\tilde{x}_1, \tilde{y}_1)$ of the UE at T1 moment and position $(\tilde{x}_2, \tilde{y}_2)$ of the UE at T2 moment.

The initial search range {$UE(x_1, y_1)$, $UE(x_2, y_2)$} may be obtained based on traditional R16 positioning methods such as TDOA or RTT.

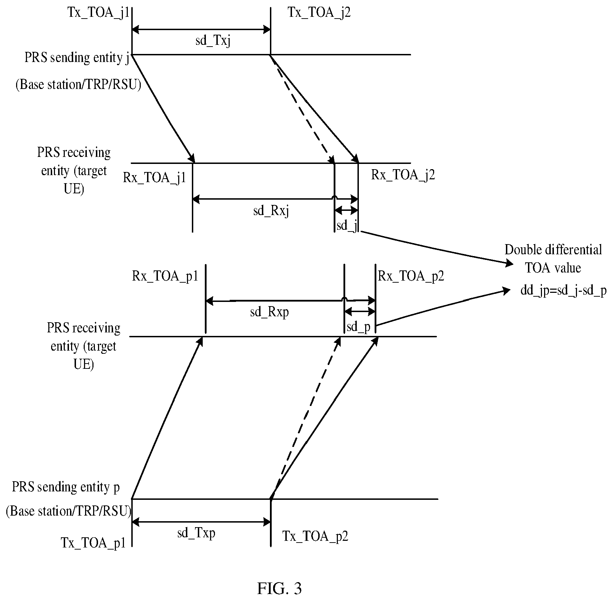

In some embodiments, as shown in FIG. 3, for example, $dd_{jp}$ may be calculated by using the following formula (2):

$$dd_{jp} = sd_j - sd_p \quad (j = \{1: N\}, j \neq p) \qquad (2)$$

where $sd_j$ represents a single differential TOA value for the TRP j introduced due to UE motion from T1 moment to T2 moment; and $sd_p$ represents a single differential TOA value for the reference TRP p introduced due to UE motion from T1 moment to T2 moment.

In some embodiments, for example, $sd_j$ may be calculated by using the following formula (3):

$$\text{where, } sd_j = (sd\_Txj - sd\_Rxj) \times c \quad (j = \{1: N\}) \qquad (3)$$

where,

$$sd\_Rxj = Rx\_TOA\_j2 - Rx\_TOA\_j1 \quad (j = \{1: N\}) \qquad (4)$$

$$sd\_Txj = Tx\_TOA\_j2 - Tx\_TOA\_j1 \quad (j = \{1: N\}) \qquad (5)$$

where,
Rx_TOA_j1 and Rx_TOA_j2 represent a reception timestamp when the UE receives a PRS signal transmitted from the j-th RSU at T1 moment and T2 moment, respectively (j = {1: N}).

Tx_TOA_j1 and Tx_TOA_j2 represent transmission timestamps of the PRS signals transmitted by the j-th RSU at T1 moment and T2 moment, respectively (j = {1: N}). In order to receive the PRS, the UE can acquire ideal Tx_TOA_j1 and Tx_TOA_j2 through transmission configuration information of the PRS.

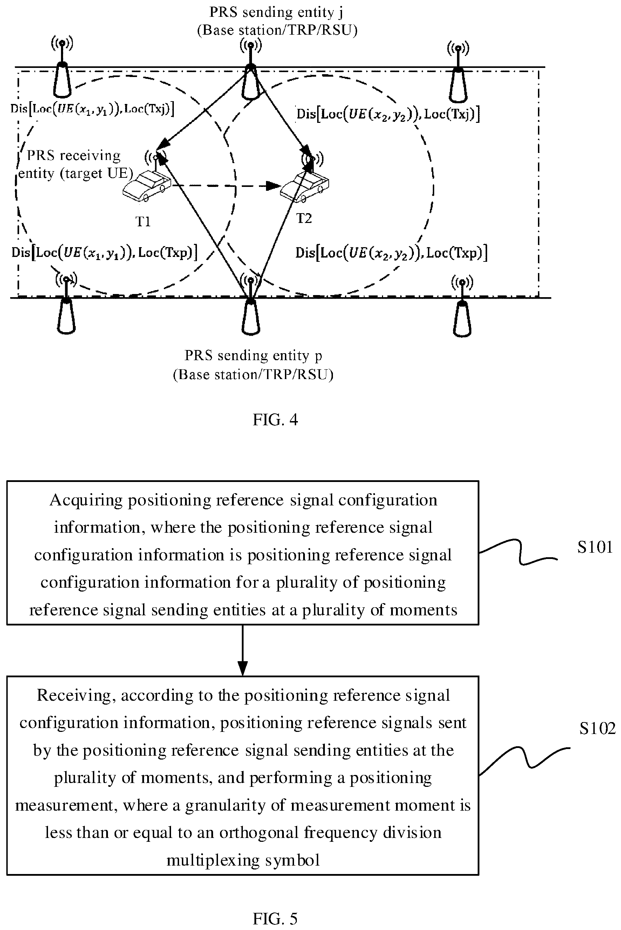

In some embodiments, as shown in FIG. 4, for example, $\overline{dd}_{jp}(x_1, y_1, x_2, y_2)$ may be calculated by using the following formula (6):

$$\overline{dd}_{jp}(x_1, y_1, x_2, y_2) = \{Dis[Loc(UE(x_2, y_2)), Loc(Txj)] - Dis[Loc(UE(x_1, y_1)), Loc(Txj)]\} - \{Dis[Loc(UE(x_2, y_2)), Loc(Txp)] --> Dis[Loc(UE(x_1, y_1)), Loc(Txp)]\} \qquad (6)$$

where, Dis[A, B] represents calculating a distance between two vector points A and B; Loc(A) and Loc(B) respectively represent positions of the vector points A and B, where A and B respectively take the following values: UE position $(UE(x_1, y_1))$ at T1 moment, UE position $(UE(x_2, y_2))$ at T2 moment, position Txj of a PRS sending entity j and position Txp of a PRS sending entity P.

The calculation process of $\overline{dd}_{jp}(x_1,y_1,x_2,y_2)$ is shown in FIG. 4, where the range in the dashed rectangular box represents the joint initial search range {UE($x_1,y_1$), UE($x_2,y_2$)} at T1 moment and T2 moment. In order to reduce the complexity of the search, a simplified way is to divide it into the search ranges determined at T1 moment and T2 moment, separately. For example, the range in the dashed circle around T1 moment represents the initial search range {UE ($x_1,y_1$)} at T1 moment, and the range in the dashed circle around T2 moment represents the initial search range {UE ($x_2,y_2$)} at T2 moment.

Case 2, the UE positions at K (K>=2) moments are resolved by using a second kind of cost function: the second kind of cost function is to, assuming that the UE is within an initial search range {$UE(x_1, y_1), UE(x_2, y_2)$}, i.e., assuming that the UE is located in position ($x_1,y_1$) at T1 moment and in position ($x_2,y_2$) at T2 moment, minimize a weighted sum of squares of a difference between a theoretical single differential TOA value $sd_{jp}(x_1,y_1,x_2,y_2)$ from the UE to any TRP j and an actually measured single differential TOA value $sd_j$ from T1 moment to T2 moment. For example, the following formula (7) is specifically used for the calculation:

$$(\tilde{x}_1,\tilde{y}_1,\tilde{x}_2,\tilde{y}_2) = \min_{(x_1,y_1,x_2,y_2)} \sum_{j=1}^{N} \frac{(\overline{sd}_j(x_1,y_1,x_2,y_2)-sd_j)^2}{\sigma_j^2} \qquad (7)$$

where, $sd_j$ is, for example, calculated by using the above formula (3), $\overline{sd}_j(x_1,y_1,x_2,y_2)$ represents, assuming that the UE is located in position ($x_1,y_1$) at T1 moment and in position ($x_2,y_2$) at T2 moment, a theoretical single differential TOA value from the UE to TRP j, where the theoretical single differential TOA value is a preset value, i.e., a theoretical single differential TOA value between T1 moment and T2 moment).

In some embodiments, for example, $\overline{sd}_j(x_1,y_1,x_2,y_2)$ may be calculated by using the following formula (8) :

$$\overline{sd}_j(x_1,y_1,x_2,y_2) = \{Dis[Loc(UE(x_2,y_2)), Loc(Txj)] - Dis[Loc(UE(x_1,y_1)), Loc(Txj)]\} \qquad (8)$$

$\sigma_j^2$ represents a variance of a TOA measurement error, which may be a preset value or notified by the network to the target UE according to the current scene.

Case 3, the UE positions at K (K>=2) moments are resolved by using a third kind of cost function:

the third kind of cost function is to, assuming that the UE is within an initial search range {UE($x_1,y_1$), UE($x_2,y_2$)}, i.e., assuming that the UE is located in position ($x_1,y_1$) at T1 moment and in position ($x_2,y_2$) at T2 moment, minimize a weighted sum of squares of a difference between a theoretical double differential carrier phase value $\overline{dd}_{jp}^{POA}(x_1,y_1,x_2,y_2)$ from the UE to any TRP j and from the UE to TRP p and an actually measured double differential carrier phase value $dd_{jp}^{POA}$ from T1 moment to T2 moment. For example, the following formula (9) is specifically used for the calculation.

$$(\tilde{x}_1,\tilde{y}_1,\tilde{x}_2,\tilde{y}_2) = \min_{(x_1,y_1,x_2,y_2)} \sum_{j=1,j\neq p}^{N} \frac{(\overline{dd}_{jp}^{POA}(x_1,y_1,x_2,y_2)-dd_{jp}^{POA})^2}{\sigma_{POA,j}^2} \qquad (9)$$

$$dd_{jp}^{POA} = sd_j^{POA} - sd_p^{POA} \quad (j = \{1:N\}, j \neq p) \qquad (10)$$

$$sd_j^{POA} = \lambda(\varphi_a^j(T_2) - \varphi_a^j(T_1)) \quad (j = \{1:N\}) \qquad (11)$$

where,
the p-th PRS sending entity is a reference PRS sending entity, where p is an element in {1: N}, and c is the speed of light (in meters per second);

$\overline{dd}_{jp}^{POA}(x_1,y_1,x_2,y_2)$ represents, assuming that the UE is located in position ($x_1,y_1$) at T1 moment and in position ($x_2,y_2$) at T2 moment, a theoretical double differential carrier phase value from the UE to TRP j and from the UE to TRP p (i.e., a theoretical double differential carrier phase value between the TRP j and the TRP p, and between T1 moment and T2 moment) (in meters).

In some embodiments, the calculation process of $\overline{dd_{jp}^{POA}}(x_1, y_1, x_2, y_2)$ is shown in formula (12) below.

$$\overline{dd_{jp}^{POA}}(x_1, y_1, x_2, y_2) = \overline{dd}_{jp}(x_1, y_1, x_2, y_2) - \lambda N_{jp}^{T1,T2} \qquad (12)$$

where, $\overline{dd}_{jp}(x_1,y_1,x_2,y_2)$ is, for example, calculated by using the above formula (6);

$N_{jp}^{T1,T2} = \{N_a^j(T2) - N_a^j(T1)\} - \{N_a^p(T2) - N_a^p(T1)\}$ represents a double differential integer ambiguity corresponding to the double differential carrier phase value of the UE for TRP j and TRP p, between T1 moment and T2 moment, where $N_a^j(T2)$ represents an integer ambiguity corresponding to measurement quantity of a carrier phase from UE a to TRP j at T2 moment, $N_a^j(T1)$ represents an integer ambiguity corresponding to measurement quantity of a carrier phase from UE a to TRP j at T1 moment, $N_a^p(T2)$ represents an integer ambiguity corresponding to measurement quantity of a carrier phase from UE a to TRP p at T2 moment, $N_a^p(T1)$ represents an integer ambiguity corresponding to measurement quantity of a carrier phase from UE a to TRP p at T1 moment, and $N_a^j(T2)$, $N_a^j(T1)$, $N_a^p(T2)$ and $N_a^p(T1)$ may be calculated by existing algorithms, such as searching based on an MLAMDA algorithm.

$\sigma_{POA,j}^2$ represents a variance of a carrier phase POA measurement error, which may be a preset value or notified by the network to the target UE according to the current scene.

The initial search range $\{(x_1,y_1,x_2,y_2)\}$ may be obtained based on existing positioning methods such as TDOA/RTT.

$\lambda$ is a carrier wavelength (in meters). $sd_j^{POA} = \lambda(\varphi_a^j(T_2) - \varphi_a^j(T_1))$, represents an actually measured single differential carrier phase value from the UE to any TRP j and from T1 moment to T2 moment; $sd_p^{POA} = \lambda(\varphi_a^p(T_2) - \varphi_a^p(T_1))$, represents an actually measured single differential carrier phase value from the UE to any reference TRP p and from T1 moment to T2 moment (in meters). $\varphi_a^j(t)$ represents measurement quantity of a carrier phase (POA) at the continuous moment obtained by the measurement at t-th moment, and is determined, for example, by the following formula (13):

$$\varphi_a^j(t) = r_a^i(t)/\lambda + c\left(\delta t^i(t) - \delta t_a(t)\right)/\lambda + \left(\varphi^{i*}(t_0) - \varphi_a^*(t_0)\right) + N_a^i(t)$$
$$+ w_{a,\varphi}^i(t) \qquad (13)$$

where,

$r_a^j(t) = c\tau_a^j(t)$ represents a preset ideal distance value (or an ideal TOA value) between UE a and gNB or TRP j (in meters), where c is the speed of light;

$N_a^j(t)$ is an unknown integer ambiguity (in cycles) in the measurement quantity of the carrier phase, which may be calculated based on the existing algorithms.

$\delta t^j(t)$ is a timing deviation (in meters) of the PRB sending entity (gNB/TRP/RSU) j, and $\delta t_a(t)$ is a timing deviation (in meters) of the UE a, where the timing deviation is caused by the crystal oscillator drift;

$\varphi^{j*}(t_0)$ is an initial phase (in cycles) of a PRB sending entity (gNB/TRP/RSU) j, and $\varphi_a^*(t_0)$ is an initial phase of UE a (in cycles);

c is the speed of light (in meters per second);

λ is a carrier wavelength (in meters);

$w_{a,\varphi}^{j}(t)$ is a preset carrier phase measurement error (in cycles), which may be a preset value or notified by the network to the target UE according to the current scene.

Case 4, the UE positions at K (K>=2) moments are resolved by using a fourth kind of cost function:

the fourth kind of cost function is to, assuming that the UE is within an initial search range $\{UE(x_1, y_1), UE(x_2, y_2)\}$, i.e., assuming that the UE is located in position $(x_1,y_1)$ at T1 moment and in position $(x_2,y_2)$ at T2 moment, minimize a weighted sum of squares of a difference between an theoretical single differential carrier phase value $\overline{sd_j^{POA}}(x_1, y_1, x_2, y_2)$ from the UE to any TRP j and an actually measured single differential carrier phase value $sd_j^{POA}$ from T1 moment to T2 moment. For example, the following formula (14) is specifically used for the calculation.

$$(\tilde{x}_1, \tilde{y}_1, \tilde{x}_2, \tilde{y}_2) = \min_{(x_1,y_1,x_2,y_2)} \sum_{j=1}^{N} \frac{(\overline{sd_j^{POA}}(x_1,y_1,x_2,y_2) - sd_j^{POA})^2}{\sigma_j^2} \qquad (14)$$

where, $sd_j^{POA} = \lambda(\varphi_a^j(T_2) - \varphi_a^j(T_1))$ represents an actually measured single differential carrier phase value from the UE to any TRP j and from T1 moment to T2 moment; $\overline{sd_j^{POA}}(x_1, y_1, x_2, y_2)$ represents, assuming that the UE is located in position $(x_1, y_1)$ at T1 moment and in position $(x_2,y_2)$ at T2 moment, a theoretical single differential carrier phase value from the UE to TRP j (i.e., a theoretical single differential carrier phase value of the TRP j between T1 moment and T2 moment).

In some embodiments, the calculation process of $\overline{sd_j^{POA}}(x_1, y_1, x_2, y_2)$ is shown in formula (15).

$$\overline{sd_j^{POA}}(x_1, y_1, x_2, y_2) = \overline{sd_j}(x_1, y_1, x_2, y_2) - \lambda N_j^{T1,T2} \qquad (15)$$

where, $\overline{sd_j}(x_1,y_1,x_2,y_2)$ is, for example, calculated by using the above formula (8);

$N_j^{T1,T2} = \{N_a^j(T2) - N_a^j(T1)\}$ represents a single differential integer ambiguity of TRP j between T1 moment and T2 moment, and $N_a^j(T2)$ and $N_a^j(T1)$ are calculated based on the existing algorithms.

Case 5, the UE positions at K (K>=2) moments are resolved by using a fifth kind of cost function:

the fifth kind of cost function is to, assuming that the UE is within an initial search range $\{UE(x_1, y_1), UE(x_2, y_2)\}$, i.e., assuming that the UE is located in position $(x_1,y_1)$ at T1 moment and in position $(x_2,y_2)$ at T2 moment, minimize an accumulated sum of a weighted square of a difference between a theoretical double differential carrier phase value $\overline{dd_{jp}^{POA}}(x_1, y_1, x_2, y_2)$ from the UE to any TRP j and from the UE to TRP p and an actually measured double differential carrier phase value $dd_{jp}^{POA}$ from T1 moment to T2 moment, and a weighted square of a difference between a theoretical double differential TOA value $\overline{dd_{jp}}(x_1,y_1,x_2,y_2)$ and an actually measured double differential TOA value $dd_{jp}$ from the UE to any TRP j and from the UE to TRP p. For example, the following formula (16) is specifically used for the calculation.

$$(\tilde{x}_1, \tilde{y}_1, \tilde{x}_2, \tilde{y}_2) = \min_{(x_1,y_1,x_2,y_2)} \sum_{j=1,j\neq p}^{N} \frac{(\overline{dd}_{jp}(x_1,y_1,x_2,y_2)-dd_{jp})^2}{\sigma_j^2} +$$

$$\frac{(\overline{dd}_{jp}^{POA}(x_1,y_1,x_2,y_2)-dd_{jp}^{POA})^2}{\sigma_{POA,j}^2} \qquad (16)$$

where $\dfrac{(\overline{dd}_{jp}(x_1,y_1,x_2,y_2)-dd_{jp})^2}{\sigma_j^2}$ can be regarded as a first weighted value of squares of the difference between the theoretical double differential TOA value and the double differential TOA value actually measured by the terminal;

$\dfrac{(\overline{dd}_{jp}^{POA}(x_1,y_1,x_2,y_2)-dd_{jp}^{POA})^2}{\sigma_{POA,j}^2}$ can be regarded as a second weighted value of squares of the difference value between the theoretical double differential POA value and the double differential POA value actually measured by the terminal;

the p-th PRS sending entity is a reference PRS sending entity, and c is the speed of light (in meters per second);

for the calculation of Rx_TOA_j1, Rx_TOA_j2, Tx_TOA_j1, Tx_TOA_j2, $\overline{dd}_{jp}(x_1,y_1,x_2,y_2)$ and $\sigma_j^2$, please refer to the above Case 1;

for the calculation of $\overline{dd}_{jp}^{POA}(x_1,y_1,x_2,y_2)$, $\sigma_{POA,j}^2$ and $\varphi_a^i(t)$, please refer to the above Case 3.

To sum up, as shown in FIG. 5, it can be seen that a positioning method on the side of a target UE provided by an embodiment of the present application, including:

S101, acquiring positioning reference signal configuration information, where the positioning reference signal configuration information is positioning reference signal configuration information for a plurality of positioning reference signal sending entities at a plurality of moments;

S102, receiving, according to the positioning reference signal configuration information, positioning reference signals sent by the plurality of positioning reference signal sending entities at the plurality of moments, and performing positioning measurement, where a granularity of a measurement moment is less than or equal to an orthogonal frequency division multiplexing symbol, for example, the granularity of the measurement moment includes an OFDM symbol or a sampling value point, that is, positioning measurement is performed according to the time accuracy of the OFDM symbol or the sampling value point.

In some embodiments, the method further includes:

reporting a positioning capability of a terminal, where the positioning capability of the terminal includes one or a combination of the following information:

a type of positioning measurement quantity supported by the terminal; where the type includes a phase of arrival and/or time of arrival;

historical speed information of the terminal;

whether the terminal supports positioning measurement for one measurement sample, that is, M=1, where the smaller M is, the smaller the positioning search range is, thereby further reducing complexity of the positioning calculation and improving efficiency and accuracy of the positioning.

In some embodiments, the performing the positioning measurement includes:

determining a number M of measurement sample, where the measurement sample is used to acquire positioning measurement quantity, M is an integer greater than or equal to 1;

acquiring the positioning measurement quantity based on the M measurement sample;

where the determining the number M of the measurement sample includes:

receiving indication information, where the indication information is used to indicate a value of the number M of the measurement sample (for a UE-assisted positioning method);

or, receiving indication information, where the indication information is used to indicate information for determining a value of the number M of the measurement sample (for a UE-based positioning method), and determining the value of the number M of the measurement sample according to the indication information.

In some embodiments, in case that a speed of the terminal is greater than a preset value (that is, high-speed UE), the value of the number M of the measurement samples is 1, thereby further reducing complexity of the positioning calculation and improving efficiency and accuracy of the positioning.

In case that the indication information is used to indicate information for determining the value of the number M of the measurement samples, the indication information includes, for example:

coordinate information of the plurality of positioning reference signal sending entities;
historical speed information of the target UE;
historical speed information of all UE within the PRS sending entity range.

In some embodiments, the method further includes (i.e., the above step A):

sending positioning measurement quantity and measurement quality indication information; where,
the positioning measurement quantity includes positioning measurement quantity of one or a combination of the following four types:

single differential time of arrival, single differential phase of arrival, double differential time of arrival and double differential phase of arrival;
the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;
a quality indication of the positioning measurement;
an indication of line of sight or non line of sight.

In some embodiments, the method further includes (i.e., the above step B): obtaining, based on the positioning measurement, measurement quantity of differential time of arrival (TOA) and/or measurement quantity of differential phase of arrival (POA); calculating, by using preset terminal position information at a plurality of different moments in an initial search range and based on a minimization criterion of a cost function, terminal position information of a terminal at the plurality of different moments;

where the differential TOA includes single differential TOA and double differential TOA;
where the measurement quantity of the differential POA includes a single differential POA and a double differential POA.

In some embodiments, the cost function includes one of the five kinds of cost functions described above, which will not be repeated.

Accordingly, a positioning method on the side of LMF (a positioning server, that is, a positioning resolving entity) includes, for example:

Step 1: the LMF receives positioning capability of the UE reported by the target UE.

The positioning capability of the UE includes but is not limited to one or a combination of the following information:

a type of positioning measurement quantity supported by the UE; where the type includes POA (Phase of Arrival, phase of arrival) and/or TOA (Time of Arrival, time of arrival), etc.;
historical speed information (including a speed range and a speed direction, etc.) estimated and stored by the UE itself;
whether the UE supports positioning measurement capacity for M=1 measurement sample;
positioning capability of the UE defined by existing standards, including a supported PRS receiving bandwidth and a number of positioning frequency layers.

The LMF may obtain an estimate of current speed information of the target UE based on the historical speed information (including a speed range and a speed direction, etc.) reported by the target UE, or the historical speed information of all target UE within the range of the PRS sending entities pre-stored by the LMF, for subsequent negotiation with a serving base station or other anchor (anchor) UE regarding suggestions of PRS resource configuration and a number M of measurement samples for number N of PRS sending entities.

Step 2: the LMF notifies the UE of the PRS configuration information for the number N of PRS sending entities at K moments after negotiating with the serving base station or other anchor (anchor) UE;
where, the PRS configuration information includes a time-frequency resource, a repetition period and a transmission timestamp of PRS, etc., and the notification signaling is LPP signaling. For the high-speed UE estimated by the LMF, the LMF will request the serving base station to configure the PRS resources of the number N of PRS sending entities in a closest possible time range, for example, using the same time domain resources and using different resource element (Resource Element, RE) shift (shift) under a given comb-size (Comb-size) condition to distinguish different PRS sending entities.

In some embodiments, for the UE-assisted positioning method, the LMF will also notify an instruction to the UE that M measurement samples are used to acquire the positioning measurement quantity. Where the LMF may determine the value of M according to an estimated value of the current speed information of the UE. For example, for high-speed UE, the positioning measurement quantity with M=1 measurement sample is used; for medium-low speed or static UE, the positioning measurement quantity with M=4 or 2 or 1 measurement sample is used.

In some embodiments, for the UE-based positioning method, the LMF notifies the UE of coordinate information of the number N of PRS sending entities. In some embodiments, the LMF may further notify the UE of the estimated value of the current speed information of the UE. Therefore, the UE can judge the positioning measurement quantity with M measurement samples adopted by itself according to the above information. For example, the target UE adopts the positioning measurement quantity with M=1 measurement sample in case of determining itself is high-speed UE; and adopts the positioning measurement quantity with M=4 or 2 or 1 measurement sample in case of determining itself is medium-low speed or static UE.

Step 3: for the UE-assisted positioning method, the LMF receives positioning measurement quantity and measurement quality indication information, reported by the UE, that is required for positioning using a joint positioning method.

The positioning measurement quantity includes but is not limited to one or a combination of the following four types:

SD TOA value: $sd_j$, for the specific calculation, see, for example, the above formula (3);
SD POA value: $sd_j^{POA}$, for the specific calculation, see, for example, the above formula (11);
DD TOA value: $dd_{jp}$, for the specific calculation, see, for example, the above formula (2);
DD POA value: $dd_{jp}^{POA}$, for the specific calculation, see, for example, the above formula (10).

The measurement quality indication information reported by the UE includes but is not limited to one or a combination of the following information:

an absolute moment or a relative moment corresponding to the positioning measurement quantity: the granularity is less than or equal to an OFDM symbol, and the granularity includes the OFDM symbol or a sampling value point;
a quality indication of the positioning measurement;
an indication of LOS (Line of Sight, Line of Sight) or NLOS (Non Line of Sight, Non Line of Sight).

Step 4: for the UE-assisted positioning method, the LML uses one of the five kinds of joint search methods described above to resolve UE positions at K (K>2) moments.

Specifically, the same can be seen for the five kinds of joint search methods described above for the side of the target UE, which will not be repeated here.

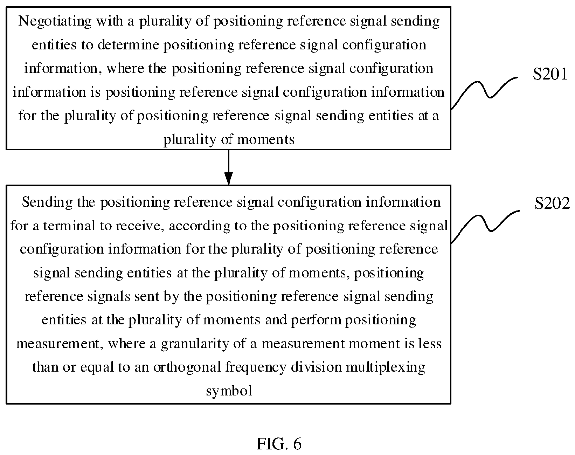

To sum up, as shown in FIG. 6, it can be seen that a positioning method on the side of the LMF provided by an embodiment of the present application, including:

S201, negotiating with a plurality of positioning reference signal sending entities to determine positioning reference signal configuration information, where the positioning reference signal configuration information is positioning reference signal configuration information for the plurality of positioning reference signal sending entities at a plurality of moments;
S202, sending the positioning reference signal configuration information for a terminal to receive, according to the positioning reference signal configuration information, positioning reference signals sent by the plurality of positioning reference signal sending entities at the plurality of moments and perform positioning measurement, where a granularity of a measurement moment is less than or equal to an orthogonal frequency division multiplexing symbol, for example including OFDM symbols or sampling value points.

In some embodiments, the method further includes:
receiving a positioning capability of a terminal, where the positioning capability includes one or a combination of the following information:

a type of positioning measurement quantity supported by the terminal; where the type includes a phase of arrival and/or time of arrival;
historical speed information of the terminal;
whether the terminal supports positioning measurement for one measurement sample.

In some embodiments, among the positioning reference signal configuration information, positions of time domain resources of positioning reference signals of the plurality of positioning reference signal sending entities at a same moment of the plurality of moments are identical or adjacent or differ in a preset range.

In some embodiments, the method further includes:
sending indication information, where the indication information indicates a value of a number M of a measurement sample, or the indication information indicates information for determining the value of the number M of the measurement sample.

In some embodiments, in case that a speed of the terminal is greater than a preset value (for example, 250 km/h), the value of the number M of the measurement sample is 1.

In some embodiments, the method further includes:

receiving positioning measurement quantity and measurement quality indication information sent by the terminal; where,
the positioning measurement quantity includes positioning measurement quantity of one or a combination of the following four types:

single differential time of arrival, single differential phase of arrival, double differential time of arrival and double differential phase of arrival;
the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;
a quality indication of the positioning measurement;
an indication of line of sight or non line of sight.

In some embodiments, the method further includes:
calculating, based on the positioning measurement quantity and by using preset terminal position information at a plurality of different moments in an initial search range, terminal position information of the terminal at the plurality of different moments based on a minimization criterion of a cost function.

In some embodiments, the cost function includes one of the five kinds of cost functions described above, which will not be repeated.

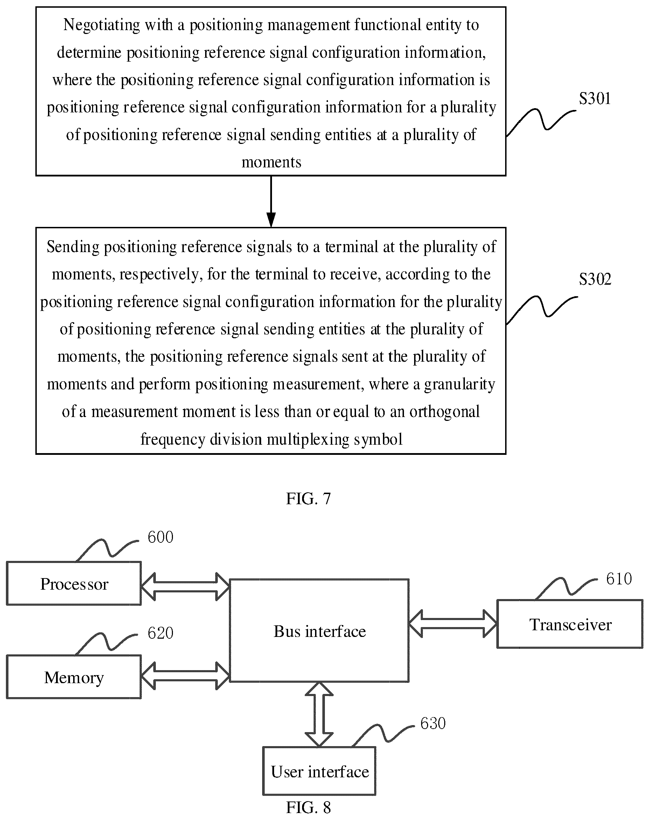

Accordingly, a positioning method on the side of a PRS sending entity (which may be gNB/TRP/RSU or other anchor (anchor) UE), for example, as shown in FIG. 7, includes:
S301, negotiating with a positioning management functional entity to determine positioning reference signal configuration information, where the positioning reference signal configuration information is positioning reference signal configuration information for a plurality of positioning reference signal sending entities at a plurality of moments.

Specifically, for example, the PRS sending entity negotiates with the LMF to determine PRS configuration information for the number N of PRS sending entities at K moments. Where the PRS configuration information includes a time-frequency resource, a repetition period and a transmission timestamp of PRS. Then, the PRS sending entity notifies the LMF of the PRS configuration information of the number N of PRS sending entities at k times through NR positioning protocol A (NRPPa) signaling, and the LMF further notifies the PRS configuration information to the UE through LTE positioning protocol (LPP) signaling.

For an NR Uu interface, the PRS includes an NR PRS signal, an NR SSB signal, an NR CSI-RS, etc., and the notification signaling is NRPPa and LPP signaling. For a Sidelink PC5 interface, the PRS includes an SL-PRS signal, and the notification signaling is SLPP signaling.

In case that the LMF provides the indication information that the target UE may be high-speed UE, the serving base station preferentially configures the PRS resources of the number N of PRS sending entities in a closest possible time range, for example, the number N of PRS sending entities use the same time domain resources and uses different RE shift under a given Comb-size condition to distinguish different PRS sending entities.

S302, sending positioning reference signals to a terminal at the plurality of moments, respectively, for the terminal to receive, according to the positioning reference signal configuration information, the positioning reference signals sent at the plurality of moments and perform positioning measurement, where a granularity of a measurement moment is less than or equal to an orthogonal frequency division multiplexing symbol.

The PRS sending entity sends PRS signals to the target UE at k moments, respectively, for example, sending downlink PRS signals with a preset period.

Illustrations of examples of three specific embodiments are given below.

Embodiment 1: a downlink UE-assisted positioning method based on the Uu interface.

Embodiment 1 will be illustrated by using the downlink UE-assisted positioning method. The UE is in a high-speed scene, M=1, N=4, and K=2. The cost functions of the search algorithm are Case 1 and Case 2.

The positioning method on the side of a target UE includes the following steps.

Step 1: the UE reports its positioning capability, including but not limited to: a type of positioning measurement quantity (POA/TOA, etc.), historical speed information (including a speed range and a speed direction, etc.) stored by the UE itself; and whether supporting the positioning measurement capacity with M=1 measurement sample.

Step 2: the UE receives PRS configuration information of N=4 PRS sending entities at K=2 moments notified by the LMF, where, the PRS configuration information includes a time-frequency resource, a repetition period and a transmission timestamp of PRS, etc., and the notification signaling is LPP signaling.

For the UE-assisted positioning method, optionally, the UE will also receive an instruction, notified by the LMF, that M measurement samples are used to acquire the positioning measurement quantity.

Step 3: the UE receives and measures PRS signals of N=4 TRP/RSU at K=2 moments, and acquires a time delay or a phase measurement quantity. The UE performs positioning measurement according to the positioning measurement quantity with M=1 measurement sample indicated by the network or judged by itself.

Step 4: for the UE-assisted downlink positioning, going to step A.

Step A: the UE reports the positioning measurement quantity and measurement quality indication information to the LMF.

The positioning measurement quantity includes but is not limited to the following two types:

single differential SD-TOA: $sd_j$, see formula (19) for definition;

double differential DD-TOA: $dd_{j1}$, see formula (18) for definition;

where, the measurement quality indication information includes but is not limited to:

an absolute moment or a relative moment corresponding to the measurement quantity: the granularity is less than or equal to an OFDM symbol, including the OFDM symbol or a sampling value point;
a quality indication of the measurement;
an indication of LOS or NLOS.

Accordingly, the positioning method on the side of an LMF includes the following steps.

Step 1: the LMF receives positioning capability of the UE reported by the UE,
including but not limited to: a supported type of positioning measurement quantity (POA/TOA), historical speed information (including a speed range and a speed direction, etc.) stored by the UE itself; and whether supporting the positioning measurement capacity with M=1 measurement sample. The LMF may obtain an estimate of current speed information of the UE based on the historical speed information (including a speed range and a speed direction, etc.) reported by the UE, or the historical speed information of all UE within the range of the PRS sending entities pre-stored by the LMF, for subsequent suggestions of PRS resource and a number M of measurement samples for N=4 PRS sending entities.

Step 2: through negotiating with the serving base station, the LMF notifies the UE about PRS configuration information of N=4 PRS sending entities at K=2 moments, where, the PRS configuration information includes a time-frequency resource, a repetition period and a transmission timestamp of PRS, etc., and the notification signaling is LPP signaling.

For the high-speed UE estimated by the LMF, the LMF will request the serving base station to configure the PRS resources of the number N=4 of PRS sending entities in a closest possible time range, for example, using the same time domain resources and using different RE shift under a Comb-size to distinguish different PRS sending entities.

For the UE-assisted positioning method, the LMF may also notify an instruction to the UE that M measurement samples are used to acquire the positioning measurement quantity. The LMF may determine the value of M according to an estimated value of the current speed information of the UE. For example, for high-speed UE, the positioning measurement quantity with M=1 measurement sample is used; and for medium-low speed or static UE, the positioning measurement quantity with M=4 or 2 or 1 measurement sample is used.

Step 3: for the UE-assisted positioning method, the LMF receives positioning measurement quantity and measurement quality indication information reported by the UE for a joint positioning method.

The positioning measurement quantity includes but is not limited to the following two types:

single differential SD-TOA: $sd_j$, see formula (19) for definition;

double differential DD-TOA: $dd_{j1}$, see formula (18) for definition;

where, the measurement quality indication information includes but is not limited to:

an absolute moment or a relative moment corresponding to the measurement quantity: the granularity is less than or equal to an OFDM symbol, including the OFDM symbol or a sampling value point;
a quality indication of the measurement;
an indication of LOS or NLOS.

Step 4: for the UE-assisted positioning method, the LML uses one of the following five kinds of joint search methods to resolve UE positions at K (K= 2) moments.

This embodiment is illustrated with Case 1 and Case 2, K=2 moments (T2 and T1), and can also be used for K (K>2) moments.

Case 1, UE positions at K=2 moments are resolved by using a first kind of cost function:

the first kind of cost function is to, assuming that the UE is located in position $(x_1, y_1)$ at T1 moment and in position $(x_2, y_2)$ at T2 moment, minimize a weighted sum of squares of a difference between a theoretical double differential TOA value $\overline{dd}_{jp}(x_1, y_1, x_2, y_2)$ from the UE to any TRP j and from the UE to TRP p and an actually measured double differential TOA value $dd_{jp}$ from T1 moment to T2 moment, as shown in formula (17).

$$(\tilde{x}_1, \tilde{y}_1, \tilde{x}_2, \tilde{y}_2) = \min_{(x_1, y_1, x_2, y_2)} \sum_{j=2}^{4} \frac{(\overline{dd}_{j1}(x_1, y_1, x_2, y_2) - dd_{j1})^2}{\sigma_j^2} \qquad (17)$$

$$dd_{j1} = sd_j - sd_1 \ (j = \{2:4\}) \qquad (18)$$

$$sd_j = (sd\_Txj - sd\_Rxj) \times c \ (j = \{1:4\}) \qquad (19)$$

$$sd\_Rxj = Rx\_TOA\_j2 - Rx\_TOA\_j1 \ (j = \{1:4\}) \qquad (20)$$

$$sd\_Txj = Tx\_TOA\_j2 - Tx\_TOA\_j1 \ (j = \{1:4\}) \qquad (21)$$

where,
the p = 1-th PRS sending entity is a reference PRS sending entity, and c is the speed of light (in meters per second);
Rx_TOA_j1 and Rx_TOA_j2 represent a reception timestamp when the UE receives a PRS signal transmitted from the j-th RSU at T1 moment and T2 moment, respectively (j = {1: 4}).

Tx_TOA_j1 and Tx_TOA_j2 represent transmission timestamps of the PRS signal transmitted by the j-th RSU at T1 moment and T2 moment, respectively (j = {1: 4}) ). In order to receive the PRS, the UE can acquire ideal Tx_TOA_j1 and Tx_TOA_j2 through transmission configuration information of the PRS.

$\overline{dd}_{j1}(x_1, y_1, x_2, y_2)$ represents assuming that the UE is located in position $(x_1, y_1)$ at T1 moment and in position $(x_2, y_2)$ at T2 moment, a theoretical double differential TOA value from the UE to TRP j (j = {2: 4}) and from the UE to TRP 1 (where the theoretical double differential TOA value is a preset value, i.e., a theoretical double differential TOA value between the TRP j and the TRP 1, and between T1 moment and T2 moment). The formula for calculating $\overline{dd}_{j1}(x_1, y_1, x_2, y_2)$ is as follows:

$$\overline{dd}_{j1}(x_1, y_1, x_2, y_2) = \{Dis[Loc(UE(x_2, y_2)), Loc(Txj)] - Dis[Loc(UE(x_1, y_1)), Loc(Txj)]\} - \{Dis[Loc(UE(x_2, y_2)), Loc(Tx1)] - Dis[Loc(UE(x_4, y_4)), Loc(Tx1)]\} \qquad (22)$$

Where Dis[A, B] represents calculating a distance between two vector points A and B; Loc(A) and Loc(B) respectively represent positions of vector points A and B, where A and B respectively take the following values: UE position $(UE(x_1,y_1))$ at T1 moment, UE position $(UE(x_2,y_2))$ at T2 moment, position Txj of PRS sending entity j and position (Tx1) of PRS sending entity 1, where (j=t2:41) .

$sd_j$ (j = {2: 4}) represents an actually single differential TOA value for the TRP j introduced due to UE motion from T1 moment to T2 moment, which is calculated by using the formula (19); where $sd_1$ represents a single differential TOA value for the reference TRP 1 introduced due to UE motion from T1 moment to T2 moment, which is calculated by using the formula (19).

$\overline{dd}_{j1}$ represents an actually double differential TOA value for the TRP j and the reference TRP p introduced due to UE motion from T1 moment to T2 moment, which is calculated by using the formula (18). $\sigma_j^2$ represents a variance of TOA measurement error, which may be a preset value or notified by the network to the target UE according to the current scene.

$(\tilde{x}_1, \tilde{y}_1, \tilde{x}_2, \tilde{y}_2)$ represents finally calculated position $(\tilde{x}_1, \tilde{y}_1)$ of the UE at T1 moment and position $(\tilde{x}_2, \tilde{y}_2)$ of the UE at T2 moment.

The initial search range $\{UE(x_1,y_1), UE(x_2,y_2)\}$ may be obtained based on traditional R16 positioning methods such as DL-TDOA/UL-TDOA/RTT.

Case 2, the UE positions at K (K>=2) moments are resolved by using a second kind of cost function:
the second kind of cost function is to, assuming that the UE is located in position $(x_1,y_1)$ at T1 moment and in position $(x_2,\underline{y_2})$ at T2 moment, minimize a weighted sum of squares of a difference between a theoretical single differential TOA value $\overline{sd}_{jp}$ $(x_1,y_1,x_2,y_2)$ from the UE to any TRP j and an actually measured single differential TOA value $sd_j$ from T1 moment to T2 moment, as shown in formula (23).

$$(\tilde{x}_1, \tilde{y}_1, \tilde{x}_2, \tilde{y}_2) = \min_{(x_1,y_1,x_2,y_2)} \sum_{j=1}^{4} \frac{(\overline{sd}_j(x_1,y_1,x_2,y_2) - sd_j)^2}{\sigma_j^2} \qquad (23)$$

where, $sd_j$ (j = {1:4}) is defined in formula (19), $\overline{sd}_j(x_1, y_1, x_2, y_2)$ represents, assuming that the UE is located in position $(x_1, y_1)$ at T1 moment and in position $(x_2, y_2)$ at T2 moment, a theoretical single differential TOA value from the UE to TRP j (where the theoretical single differential TOA value is a preset value, i.e., a theoretical single differential TOA value between T1 moment and T2 moment). The formula for calculating $\overline{sd}_j(x_1, y_1, x_2, y_2)$ is as follows:

$$\overline{sd}_j(x_1, y_1, x_2, y_2) = \{Dis[Loc(UE(x_2, y_2)), Loc(Txj)] - Dis[Loc(UE(x_1, y_1)), Loc(Txj)]\} \qquad (24)$$

where, $\sigma_j^2$ represents a variance of TOA measurement error, which may be a preset value or notified by the network to the target UE according to the current scene.

Accordingly, the positioning method on the side of a PRS sending entity includes the following steps.

Step 1: the serving base station (PRS sending entity) negotiates with LMF to determine PRS configuration information of N=4 PRS sending entities at K=2 moments, where, the PRS configuration information includes a time-frequency resource, a repetition period and a transmission timestamp etc., and then notifies the LMF through NRPPa signaling, and the LMF further notifies the UE through LPP signaling.

In case that the LMF provides the indication information that this UE is high-speed UE, the serving base station preferentially configures the PRS resources of the N=4 PRS sending entities in a closest possible time range, for example, using the same time domain resources and using different RE shift under a Comb-size to distinguish different PRS sending entities.

Step 2: the N=4 PRS sending entities send PRS signals to the UE at k=2 moments, respectively, for example, sending a downlink PRS signal with a period of 10 ms.

Embodiment 2: downlink UE-based positioning method based on the Uu interface.

Embodiment 2 will be illustrated by using the downlink UE-based positioning method based on the Uu interface. The UE is in a high-speed scene, M=1, N=6, and K=2. The cost functions of the search algorithm are the Case 3 and Case 4.

The positioning method on the side of a target UE includes the following steps.

Step 1: the UE reports its positioning capability, including but not limited to: a supported type of positioning measurement quantity (POA/TOA), historical speed information (including a speed range and a speed direction, etc.) stored by the UE itself; and whether supporting the positioning measurement capacity with M=1 measurement sample.

Step 2: the UE receives PRS configuration information of the number N of PRS sending entities at K moments notified by the LMF, where, the PRS configuration information includes a time-frequency resource, a repetition period and a transmission timestamp of PRS, etc., and the notification signaling is LPP signaling.

For the UE-based positioning method, the UE will receive coordinate information of the number N of PRS sending entities notified by the LMF. Optionally, the UE may also receive historical speed information for the UE (including a speed range and a speed direction, etc.) pre-stored by the LMF, or historical speed information of all UE within the PRS sending entity range pre-stored by the LMF. The UE judges the positioning measurement quantity with M measurement samples according to the above information. For example, for high-speed UE, the positioning measurement quantity with M=1 measurement sample is used; and for medium-low speed or static UE, the positioning measurement quantity with M=4 or 2 or 1 measurement sample is used.

Step 3: the UE receives and measures PRS signals of a number N=6 of PRS sending entities at K=2 moments, and acquires a time delay or a phase measurement quantity. The UE performs positioning measurement according to the positioning measurement quantity with M=1 measurement samples indicated by the network or judged by itself.

Step 4: for the UE-based downlink positioning, going to step B.

Step B: the UE uses one of the following five kinds of joint search methods to resolve UE positions at K (K=2) moments.

This embodiment is illustrated with Case 3 and Case 4, K=2 moments (T2 and T1), and can also be used for K (K>2) moments.

Case 3, the UE positions at K (K>=2) moments are resolved by using a third kind of cost function:

the third kind of cost function is to, assuming that the UE is located in position $(x_1,y_1)$ at T1 moment and in position $(x_2,y_2)$ at T2 moment, minimize a weighted sum of squares of a difference between a theoretical double differential carrier phase value $\overline{dd_{j1}^{POA}}(x_1,y_1,x_2,y_2)$ from the UE to any TRP j and from the UE to TRP p=1 and an actually measured double differential carrier phase value $dd_{j1}^{POA}$ from T1 moment to T2 moment, as shown in formula (25).

$$(\tilde{x}_1, \tilde{y}_1, \tilde{x}_2, \tilde{y}_2) = \min_{(x_1,y_1,x_2,y_2)} \sum_{j=2}^{6} \frac{(\overline{dd_{j1}^{POA}}(x_1,y_1,x_2,y_2) - dd_{j1}^{POA})^2}{\sigma_{POA,j}^2} \qquad (25)$$

$$dd_{j1}^{POA} = sd_j^{POA} - sd_1^{POA} \quad (j = \{2:6\}) \qquad (26)$$

$$sd_j^{POA} = \lambda(\varphi_a^j(T_2) - \varphi_a^j(T_1)) \quad (j = \{1:6\}) \qquad (27)$$

where,

the p = 1-th PRS sending entity is a reference PRS sending entity, and c is the speed of light (in meters per second);

$\overline{dd_{j1}^{POA}}(x_1,y_1,x_2,y_2)$ (j = {2:6}) represents, assuming that the UE is located in position $(x_1,y_1)$ at T1 moment and in position $(x_2,y_2)$ at T2 moment, a theoretical double differential carrier phase value from the UE to TRP j and from the UE to TRP 1 (i.e., a theoretical double differential carrier phase value between the TRP j and the TRP 1, and between T1 moment and T2 moment) (in meters). The calculation process of $\overline{dd_{jp}^{POA}}(x_1,y_1,x_2,y_2)$ is shown in formula (28).

$$\overline{dd_{j1}^{POA}}(x_1,y_1,x_2,y_2) = \overline{dd}_{j1}(x_1,y_1,x_2,y_2) - \lambda N_{j1}^{T1,T2} \qquad (28)$$

where, $\overline{dd}_{j1}(x_1,y_1,x_2,y_2)$ is shown in formula (22);

$N_{j1}^{T1,T2} = \{N_a^j(T2) - N_a^j(T1)\} - \{N_a^1(T2) - N_a^1(T1)\}$ represents a double differential integer ambiguity corresponding to the double differential carrier phase value of UE for TRP j and TRP 1, between T1 moment and T2 moment, where $N_a^j(T2)$ represents an integer ambiguity corresponding to measurement quantity of a carrier phase from UE a to TRPj at T2 moment, $N_a^j(T1)$ represents an integer ambiguity corresponding to measurement quantity of a carrier phase from UE a to TRP j at T1 moment, $N_a^1(T2)$ represents an integer ambiguity corresponding to measurement quantity of a carrier phase from UE a to TRP p=1 at T2 moment, $N_a^1(T1)$ represents an integer ambiguity corresponding to measurement quantity of a carrier phase from UE a to TRP p=1 at T1 moment, and $N_a^j(T2), N_a^j(T1), N_a^1(T2)$ and $N_a^1(T1)$ may be calculated by existing algorithms, such as searching based on MLAMDA algorithm;

$\sigma_{POA,j}^2$ represents a variance of a carrier phase POA measurement error, which may be a preset value or notified by the network to the target UE according to the current scene.

The initial search range $\{(x_1, y_1, x_2, y_2)\}$ may be obtained based on existing positioning methods such as TDOA/RTT.

$\lambda$ is a carrier wavelength (in meters). $sd_j^{POA} = \lambda(\varphi_a^j(T_2) - \varphi_a^j(T_1))$ represents an actually measured single differential carrier phase value from the UE to any TRP j (j={2:6}) and from T1 moment to T2 moment; $sd_1^{POA} = \lambda(\varphi_a^1(T_2) - \varphi_a^1(T_1))$ represents an actually measured single differential carrier phase value from the UE to any reference TRP 1 from T1 moment to T2 moment (in meters). $\varphi_a^j(t)$ represents measurement quantity of a carrier phase (POA) at the continuous moment obtained by the measurement at t-th moment, see in formula (13) for definition.

Case 4, the UE positions at K (K>=2) moments are resolved by using a fourth kind of cost function: the fourth kind of cost function is to, assuming that the UE is located in position $(x_1, y_1)$ at T1 moment and in position $(x_2,y_2)$ at T2 moment, minimize a weighted sum of squares of a difference between a theoretical single differential carrier phase value $\overline{sd_j^{POA}}(x_1, y_1, x_2, y_2)$ from UE to any TRP j and an actually measured single differential carrier phase value $sd_j^{POA}$ from T1 moment to T2 moment, as shown in formula (29).

$$(\tilde{x}_1, \tilde{y}_1, \tilde{x}_2, \tilde{y}_2) = \min_{(x_1,y_1,x_2,y_2)} \sum_{j=1}^N \frac{(\overline{sd_j^{POA}}(x_1,y_1,x_2,y_2) - sd_j^{POA})^2}{\sigma_j^2} \qquad (29)$$

where, $sd_j^{POA} = \lambda(\varphi_a^j(T_2) - \varphi_a^j(T_1))$ represents an actually measured single differential carrier phase value from the UE to any TRP j and from T1 moment to T2 moment; $\overline{sd_j^{POA}}(x_1, y_1, x_2, y_2)$ represents, assuming that the UE is located in position $(x_1, y_1)$ at T1 moment and in position $(x_2,y_2)$ at T2 moment, a theoretical single differential carrier phase value from the UE to TRP j (i.e., a theoretical single differential carrier phase value of the TRP j between T1 moment and T2 moment) (in meters). The calculation process of $\overline{sd_j^{POA}}(x_1, y_1, x_2, y_2)$ is shown in formula (15).

Accordingly, the positioning method on the side of a LMF includes the following steps.

Step 1: the LMF receives positioning capability of the UE reported by the UE, including but not limited to: a supported type of positioning measurement quantity (POA/TOA), historical speed information (including a speed range and a speed direction, etc.) stored by the UE itself; and whether supporting the positioning measurement capacity with M=1 measurement sample. The LMF may obtain an estimate of the current speed information of the UE based on the historical speed information (including a speed range and a speed direction, etc.) reported by the UE, or the historical speed information of all UE within the range of the PRS sending entities pre-stored by the LMF, for subsequent suggestions of PRS resource configuration and a number M of measurement samples for number N=6 of PRS sending entities.

Step 2: after negotiating with the serving base station, the LMF notifies the UE about PRS configuration information of number N=6 of PRS sending entities at K=2 moments, where, the PRS configuration information includes a time-frequency resource, a repetition period and a transmission timestamp of PRS, etc., and the notification signaling is LPP signaling. For the high-speed UE estimated by the LMF, the LMF will request the serving base station to configure the PRS resources of the number N=6 of PRS sending entities in a closest possible time range, for example, using the same time domain resources and using different RE shift under a Comb-size to distinguish different PRS sending entities.

For the UE-based positioning method, the LMF notifies the UE of coordinate information of the number N=6 of PRS sending entities. Optionally, the LMF may further notify UE of the estimated value of the current speed information of the UE for the UE to judge the positioning measurement quantity with M measurement samples according to the above information. For example, for high-speed UE, the positioning measurement quantity with M=1 measurement sample is used; and for medium-low speed or static UE, the positioning measurement quantity with M=4 or 2 or 1 measurement sample is used.

Accordingly, the positioning method on the side of a PRS sending entity includes the following steps.

Step 1: the serving base station (PRS sending entity) negotiates with LMF to determine PRS configuration information of number N=6 of PRS sending entities at K=2 moments, where, the PRS configuration information includes a time-frequency resource, a repetition period and a transmission timestamp, etc., and then notifies the LMF through NRPPa signaling, and the LMF further notifies the UE through LPP signaling.

In case that the LMF provides the indication information that this UE may be high-speed UE, the serving base station preferentially configures the PRS resources of the number N=6 of PRS sending entities in a closest possible time range, for example, using the same time domain resources and using different RE shift under a Comb-size to distinguish different PRS sending entities.

Step 2: the number N=6 of PRS sending entities send PRS signals to the UE at k=2 moments, respectively, for example, sending a downlink PRS signal with a period of 10 ms.

Embodiment 3: UE-based positioning method based on the Sidelink PC5 interface.

Embodiment 3 will be illustrated by using the UE-based positioning method based on the Sidelink PC5 interface. The UE is in a high-speed scene, M=1, N=6, and K=2. The cost function of the search algorithm is the Case 5.

The positioning method on the side of a target UE includes the following steps.

Step 1: the UE reports its positioning capability, including but not limited to: a supported type of positioning measurement quantity (POA/TOA), historical speed information (including a speed range and a speed direction, etc.) estimated and stored by the UE itself; and whether supporting the positioning measurement capacity with M=1 measurement sample;

Step 2: the UE receives PRS configuration information of the number N of PRS sending entities at K moments notified notified by the LMF or other anchor (anchor) UE, where, the PRS configuration information includes a time-frequency resource, a repetition period and a transmission timestamp of PRS, etc., and the notification signaling is LPP/SLPP signaling. For an NR Uu interface, the PRS includes NR PRS signal, NR SSB signal and NR CSI-RS, etc., and the notification signaling is LPP signaling. For a Sidelink PC5 interface, the PRS includes an SL-PRS signal, and the notification signaling is SLPP signaling.

For the UE-based positioning method, the UE will receive coordinate information of the N base station/PRS/RSU notified by LMF or other anchor (anchor) UE. In some embodiments, the UE may also receive historical speed information for the UE (including a speed range and a speed direction, etc.) pre-stored by the LMF, or historical speed information of all UE within the PRS sending entity range pre-stored by the LMF. The UE judges the positioning measurement quantity with M measurement samples according to the above information. For example, for high-speed UE, the positioning measurement quantity with M=1 measurement sample is used; and for medium-low speed or static UE, the positioning measurement quantity with M=4 or 2 or 1 measurement sample is used.

Step 3: the UE receives and measures PRS signals of number N=6 of PRS sending entities at K=2 moments, and acquires a time delay and/or a phase measurement quantity. The UE performs positioning measurement according to the positioning measurement quantity with M measurement samples indicated by the network or judged by itself.

Step 4: for the UE-based sidelink positioning, going to step B.

Step B: the UE uses case 5 below to resolve UE positions at K (K=2) moments.

This embodiment is illustrated with K=2 moments (T2 and T1), and can also be used for K (K>2) moments.

Case 5, the UE positions at K (K>=2) moments are resolved by using a third kind of cost function:

the fifth kind of cost function is to, assuming that the UE is located in position $(x_1, y_1)$ at T1 moment and in position $(x_2, y_2)$ at T2 moment, minimize an accumulated sum of a weighted square of a difference between a theoretical double differential carrier phase value $\overline{dd_{jp}^{POA}}(x_1, y_1, x_2, y_2)$ from the UE to any TRP j and from the UE to TRP p and an actually measured double differential carrier phase value $dd_{jp}^{POA}$ from T1 moment to T2 moment, and a weighted square of a difference between a theoretical double differential TOA value $\overline{dd}_{jp}(x_1, y_1, x_2, y_2)$ and an actually measured double differential TOA value $dd_{ip}$ from the UE to any TRP j and from the UE to TRP p, as shown in formula (30).

$$(\tilde{x}_1, \tilde{y}_1, \tilde{x}_2, \tilde{y}_2) = \min_{(x_1, y_1, x_2, y_2)} \sum_{j=2}^{6} \frac{(\overline{dd}_{j1}(x_1, y_1, x_2, y_2) - dd_{j1})^2}{\sigma_j^2} +$$

$$\frac{(\overline{dd}_{jp}^{POA}(x_1, y_1, x_2, y_2) - dd_{jp}^{POA})^2}{\sigma_{POA,j}^2} \tag{30}$$

where,

the p = 1-th PRS sending entity is a reference PRS sending entity, and c is the speed of light (in meters per second);

for the definitions of Rx_TOA_j1, Rx_TOA_j2, Tx_TOA_j1, Tx_TOA_j2, $\overline{dd}_{j1}(x_1, y_1, x_2, y_2)$ and $\sigma_j^2$, refer to Case 1 in Embodiment 1;

for the definitions of $\overline{dd_{j1}^{POA}}(x_1, y_1, x_2, y_2)$, $\sigma_{POA,j}^2$, $\varphi_a^j(t)$ and $\sigma_{POA,j}^2$, refer to Case 3 in Embodiment 2.

Accordingly, the positioning method on the side of a LMF includes the following steps.

Step 1: the LMF receives positioning capability of the UE reported by the UE, including but not limited to: a supported type of positioning measurement quantity (POA/TOA), historical speed information (including a speed range and a speed direction, etc.) stored by the UE itself; and whether supporting the positioning measurement capacity with M=1 measurement sample. The LMF may obtain an estimate of the current speed information of the UE based on the historical speed information (including a speed range and a speed direction, etc.) reported by the UE, or the historical speed information of all UE within the range of the PRS sending entities pre-stored by the LMF, for subsequent suggestions of PRS resource configuration and a number M of measurement samples for number N=6 of PRS sending entities.

Step 2: after negotiating with the serving base station, the LMF notifies the UE about PRS configuration information of number N=6 of PRS sending entities at K=2 moments, where, the PRS configuration information includes a time-frequency resource, a repetition period and a transmission timestamp of PRS, etc., and the notification signaling is LPP signaling. For the high-speed UE estimated by the LMF, the LMF will request the serving base station to configure the PRS resources of the number N=6 of PRS sending entities in a closest possible time range, for example, using the same time domain resources and using different RE shift under a Comb-size to distinguish different PRS sending entities.

For the UE-based positioning method, the LMF notifies the UE of coordinate information of the number N=6 of PRS sending entities. Optionally, the LMF may further notify UE of the estimated value of the current speed information of the UE for the UE to judge the positioning measurement quantity with M measurement samples according to the above information. For example, for high-speed UE, the positioning measurement quantity with M=1 measurement sample is used; and for medium-low speed or static UE, the positioning measurement quantity with M=4 or 2 or 1 measurement sample is used.

Accordingly, the positioning method on the side of a PRS sending entity includes the following steps.

Step 1: the serving base station or other anchor (anchor) UE negotiates with LMF to determine PRS configuration information of number N of PRS sending entities at K moments, where, the PRS configuration information includes a time-frequency resource, a repetition period and a transmission timestamp, etc., and then notifies the LMF through NRPPa signaling, and the LMF further notifies the UE through LPP signaling. For an NR Uu interface, the PRS includes an NR PRS signal, an NR SSB signal, an NR CSI-RS, etc., and the notification signaling is NRPPa and LPP signaling. For a Sidelink PC5 interface, the PRS includes an SL-PRS signal, and the notification signaling is SLPP signaling.

In case that the LMF provides the indication information that this UE may be high-speed UE, the serving base station preferentially configures the PRS resources of the number N of PRS sending entities in a closest possible time range, for example, using the same time domain resources and using different RE shift under a given Comb-size condition to distinguish different PRS sending entities.

Step 2: the number N=6 of PRS sending entities or other anchor (anchor) UE send PRS signals to the target UE at k=2 moments, respectively, for example, sending downlink PRS signals with a given period.

To sum up, in the embodiment of the present application, a joint positioning method based on measurement quantities at different moments is provided, which can overcome the influence of UE motion and Doppler shift on positioning accuracy, and is suitable for scenarios of high-speed, medium-speed and low-speed UE, and is also suitable for the downlink UE-assisted positioning method and the UE-based positioning (including the Uu positioning and sidelink positioning) method. It solves the problem in the prior art that the Doppler shift brought by high speed will lead to a greater loss of positioning accuracy (including absolute positioning or relative positioning) in RTT positioning and TDOA positioning.

Based on the same inventive concept, a device or an apparatus provided by embodiments of the present application will be described below, and the explanations or examples of the same or corresponding technical features as those described in the above method will not be repeated subsequently.

On the side of a terminal, an embodiment of the present application provides a positioning apparatus, including: a processor 600, configured to read a program in a memory 620 and perform the following operations:

acquiring positioning reference signal configuration information, where the positioning reference signal configuration information is positioning reference signal configuration information for a plurality of positioning reference signal sending entities at a plurality of moments;

receiving, according to the positioning reference signal configuration information, positioning reference signals sent by the plurality of positioning reference signal sending entities at the plurality of moments, and performing positioning measurement, where a granularity of a measurement moment is less than or equal to an orthogonal frequency division multiplexing symbol.

In some embodiments, the processor 600 is further configured to read the computer program in the memory and perform the following operations:

reporting a positioning capability of a terminal, where the positioning capability of the terminal includes one or a combination of the following information:

a type of positioning measurement quantity supported by the terminal; where the type includes a phase of arrival and/or time of arrival;

historical speed information of the terminal;

whether the terminal supports positioning measurement for one measurement sample.

In some embodiments, the performing the positioning measurement includes:

determining a number M of measurement sample, where the measurement sample is used to acquire positioning measurement quantity, M is an integer greater than or equal to 1;

acquiring the positioning measurement quantity based on the M measurement sample;

where determining the number M of measurement samples includes:

receiving indication information, where the indication information is used to indicate a value of the number M of the measurement sample;

or, receiving indication information, where the indication information is used to indicate information for determining a value of the number M of the measurement sample, and determining the value of the number M of the measurement sample according to the indication information.

In some embodiments, in case that a speed of the terminal is greater than a preset value, the value of the number M of the measurement sample is 1.

In some embodiments, the processor 600 is further configured to read the computer program in the memory and perform the following operations:

sending positioning measurement quantity and measurement quality indication information; where,

the positioning measurement quantity includes positioning measurement quantity of one or a combination of the following four types:

single differential time of arrival, single differential phase of arrival, double differential time of arrival and double differential phase of arrival;

the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;

a quality indication of the positioning measurement;

an indication of line of sight or non line of sight.

In some embodiments, the processor 600 is further configured to read the computer program in the memory and perform the following operations:

obtaining, based on the positioning measurement, measurement quantity of differential time of arrival (TOA) and/or measurement quantity of differential phase of arrival (POA); calculating, by using preset terminal position information at a plurality of different moments in an initial search range and based on a minimization criterion of a cost function, terminal position information of a terminal at the plurality of different moments;

where the differential TOA includes single differential TOA and double differential TOA;

where the measurement quantity of the differential POA includes a single differential POA and a double differential POA.

The cost function includes one of the five kinds of cost functions described above, which will not be repeated.

A transceiver 610 is configured to receive and send data under control of the processor 600.

In FIG. 8, a bus architecture may include any number of interconnected buses and bridges. Specifically, various circuits of one or more processors represented by the processor 600 and the memory represented by the memory 620 are linked together. The bus architecture may also link together various other circuits, such as a peripheral device, a voltage regulator and a power management circuit, which are well known in the art and are therefore not described further herein. A bus interface provides an interface. The transceiver 610 may be a plurality of elements, that is, including a transmitter and a receiver, and providing units for communicating with various other apparatuses in transmission media. These transmission media include, these transmission media include transmission media such as a wireless channel, a wired channel, an optical cable and the like. For different user equipment, the user interface 630 may also be an interface capable of externally/internally connecting desired devices, where the devices include but not limited to a keypad, a display, a speaker, a microphone, a joystick and the like.

The processor 600 is responsible for managing the bus architecture and general processing, and the memory 620 can store data used by the processor 600 when performing operations.

In some embodiments, the processor 600 may be a CPU (central processor unit), an ASIC (Application Specific Integrated Circuit, application-specific integrated circuit), an FPGA (Field-Programmable Gate Array, field-programmable gate array) or a CPLD (Complex Programmable Logic Device, complex programmable logic device), and the processor may also adopt a multi-core architecture.

The processor is configured to execute any of the methods provided by the embodiments of the present application according to obtained executable instructions by calling a computer program stored in the memory. The processor and the memory may also be physically separated.

It should be noted here that the above apparatus provided by the embodiment of the present application can implement all the method steps implemented by the above method embodiments, and can achieve the same technical effects, therefore, the parts of this embodiment that are the same as the method embodiments and the beneficial effects thereof will not be specifically detailed here.

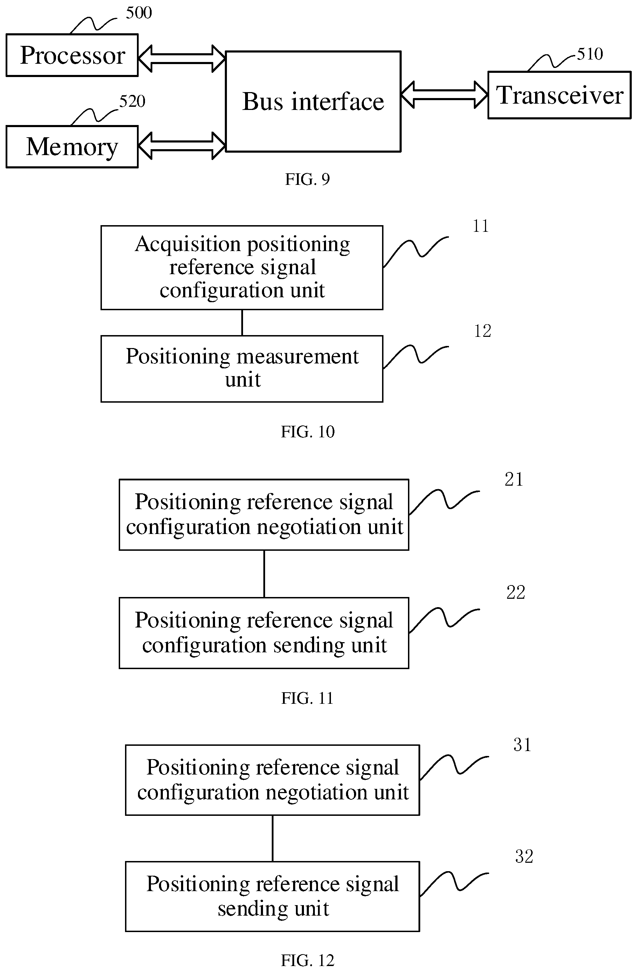

On the side of an LMF entity, as shown in FIG.9, an embodiment of the present application provides a positioning apparatus, including:

a processor 500, configured to read a program in a memory 520 and perform the following operations:

negotiating with a plurality of positioning reference signal sending entities to determine positioning reference signal configuration information, where the positioning reference signal configuration information is positioning reference signal configuration information for the plurality of positioning reference signal sending entities at a plurality of moments;

sending the positioning reference signal configuration information for a terminal to receive, according to the positioning reference signal configuration information, positioning reference signals sent by the plurality of positioning reference signal sending entities at the plurality of moments and perform positioning measurement, where a granularity of a measurement moment is less than or equal to an orthogonal frequency division multiplexing symbol.

In some embodiments, the processor 500 is further configured to read the computer program in the memory and perform the following operations:

receiving a positioning capability of a terminal, where the positioning capability includes one or a combination of the following information:

a type of positioning measurement quantity supported by the terminal; where the type includes a phase of arrival and/or time of arrival;

historical speed information of the terminal;

whether the terminal supports positioning measurement for one measurement sample.

In some embodiments, among the positioning reference signal configuration information, positions of time domain resources of positioning reference signals of the plurality of positioning reference signal sending entities at a same moment of the plurality of moments are identical or adjacent or differ in a preset range.

In some embodiments, the processor 500 is further configured to read the computer program in the memory and perform the following operations:
sending indication information, where the indication information indicates a value of a number M of measurement sample, or the indication information indicates information for determining the value of the number M of the measurement sample.

In some embodiments, in case that a speed of the terminal is greater than a preset value, the value of the number M of the measurement sample is 1.

In some embodiments, the processor 500 is further configured to read the computer program in the memory and perform the following operations:

receiving positioning measurement quantity and measurement quality indication information sent by the terminal; where,
the positioning measurement quantity includes positioning measurement quantity of one or a combination of the following four types:

single differential time of arrival, single differential phase of arrival, double differential time of arrival and double differential phase of arrival;
the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;
a quality indication of the positioning measurement;
an indication of line of sight or non line of sight.

In some embodiments, the processor 500 is further configured to read the computer program in the memory and perform the following operations:
calculating, based on the positioning measurement quantity and by using preset terminal position information at a plurality of different moments in an initial search range, terminal position information of the terminal at the plurality of different moments based on a minimization criterion of a cost function.

The cost function includes one of the five kinds of cost functions described above, which will not be repeated.

A transceiver 510 is configured to receive and send data under control of the processor 500.

In FIG. 9, a bus architecture may include any number of interconnected buses and bridges. Specifically, various circuits of one or more processors represented by the processor 500 and the memory represented by the memory 520 are linked together. The bus architecture may also link together various other circuits, such as a peripheral device, a voltage regulator and a power management circuit, which are well known in the art and are therefore not described further herein. A bus interface provides an interface. The transceiver 510 may be a plurality of elements, that is, including a transmitter and a receiver, and providing units for communicating with various other apparatuses in transmission media. These transmission media include transmission media such as a wireless channel, a wired channel, an optical cable and the like. The processor 500 is responsible for managing the bus architecture and general processing, and the memory 520 can store data used by the processor 500 when performing operations.

The processor 500 can be a central processor unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor can also adopt a multi-core architecture.

On the side of a positioning reference signal sending entity, an embodiment of the present application provides a positioning apparatus, including a memory, a transceiver and a processor.
where the memory is configured to store a computer program; the transceiver is configured to transmit and receive data under control of the processor; the processor is configured to read the computer program in the memory and perform the following operations:

negotiating with a positioning management functional entity to determine positioning reference signal configuration information, where the positioning reference signal configuration information is positioning reference signal configuration information for a plurality of positioning reference signal sending entities at a plurality of moments;
sending positioning reference signals to a terminal at the plurality of moments, respectively, for the terminal to receive, according to the positioning reference signal configuration information, the positioning reference signals sent at the plurality of moments and perform positioning measurement, where a granularity of a measurement moment is less than or equal to an orthogonal frequency division multiplexing symbol.

In some embodiments, among the positioning reference signal configuration information, positions of time domain resources of positioning reference signals of the plurality of positioning reference signal sending entities at a same moment of the plurality of moments are identical or adjacent or differ in a preset range.

If the positioning reference signal sending entity is a terminal (such as an anchor UE), its structure can refer to FIG. 8, and if it is a network-side apparatus, its structure can refer to FIG. 9.

As shown in FIG.10, on the side of a target UE, an embodiment of the present application provides another positioning apparatus, including:

an acquisition positioning reference signal configuration unit 11, configured to acquire positioning reference signal configuration information, where the positioning reference signal configuration information is positioning reference signal configuration information for a plurality of positioning reference signal sending entities at a plurality of moments; a positioning measurement unit 12, configured to receive, according to the positioning reference signal configuration information, positioning reference signals sent by the plurality of positioning reference signal sending entities at the plurality of moments, and perform positioning measurement, where a granularity of a measurement moment is less than or equal to an orthogonal frequency division multiplexing symbol.

In some embodiments, the acquisition positioning reference signal configuration unit 11 is further configured to: report a positioning capability of a terminal, where the positioning capability of the terminal includes one or a combination of the following information:

a type of positioning measurement quantity supported by the terminal; where the type includes a phase of arrival and/or time of arrival; historical speed information of the terminal estimated and stored by the terminal; whether the terminal supports positioning measurement for one measurement sample.

In some embodiments, the performing the positioning measurement includes:

determining a number M of measurement sample, where the measurement sample is used to acquire positioning measurement quantity, M is an integer greater than or equal to 1; acquiring the positioning measurement quantity based on the M measurement sample; where the determining the number M of the measurement sample includes:

receiving indication information, where the indication information is used to indicate a value of the number M of the measurement sample; or, receiving indication information, where the indication information is used to indicate information for determining a value of the number M of the measurement sample, and determining the value of the number M of the measurement sample according to the indication information.

In some embodiments, in case that a speed of the terminal is greater than a preset value, the value of the number M of the measurement sample is 1.

In some embodiments, the positioning measurement unit 12 is further configured to:

send positioning measurement quantity and measurement quality indication information; where, the positioning measurement quantity includes positioning measurement quantity of one or a combination of the following four types:

single differential time of arrival, single differential phase of arrival, double differential time of arrival and double differential phase of arrival; the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment; a quality indication of the positioning measurement; an indication of line of sight or non line of sight.

In some embodiments, the positioning measurement unit 12 is further configured to: obtain, based on the positioning measurement, measurement quantity of differential time of arrival (TOA) and/or measurement quantity of differential phase of arrival (POA); calculate, by using preset terminal position information at a plurality of different moments in an initial search range and based on a minimization criterion of a cost function, terminal position information of a terminal at the plurality of different moments;

where the differential TOA includes single differential TOA and double differential TOA;
where the measurement quantity of the differential POA includes a single differential POA and a double differential POA.

In some embodiments, the cost function includes one of the five kinds of cost functions described above, which will not be repeated.
As shown in FIG. 11, on the side of a positioning management functional entity, an embodiment of the present application provides another positioning apparatus, including:

a positioning reference signal configuration negotiation unit 21, configured to negotiate with a plurality of positioning reference signal sending entities to determine positioning reference signal configuration information, where the positioning reference signal configuration information is positioning reference signal configuration information for the plurality of positioning reference signal sending entities at a plurality of moments;
a positioning reference signal configuration sending unit 22, configured to send the positioning reference signal configuration information for a terminal to receive, according to the positioning reference signal configuration information, positioning reference signals sent by the plurality of positioning reference signal sending entities at the plurality of moments and perform positioning measurement, where a granularity of a measurement moment is less than or equal to an orthogonal frequency division multiplexing symbol.

In some embodiments, the positioning reference signal configuration negotiation unit 21 is further configured to: receive a positioning capability of a terminal, where the positioning capability includes one or a combination of the following information:

a type of positioning measurement quantity supported by the terminal; where the type includes a phase of arrival and/or time of arrival;
historical speed information of the terminal;
whether the terminal supports positioning measurement for one measurement sample.

In some embodiments, among the positioning reference signal configuration information, positions of time domain resources of positioning reference signals of the plurality of positioning reference signal sending entities at a same moment of the plurality of moments are identical or adjacent or differ in a preset range.
In some embodiments, the positioning reference signal configuration sending unit 22 is further configured to: send indication information, where the indication information indicates a value of a number M of measurement sample, or the indication information indicates information for determining the value of the number M of the measurement sample.
In some embodiments, in case that a speed of the terminal is greater than a preset value, the value of the number M of the measurement sample is 1.
In some embodiments, the positioning reference signal configuration sending unit 22 is further configured to:

receive positioning measurement quantity and measurement quality indication information sent by the terminal; where,
the positioning measurement quantity includes positioning measurement quantity of one or a combination of the following four types:

single differential time of arrival, single differential phase of arrival, double differential time of arrival and double differential phase of arrival;
the measurement quality indication information includes one or a combination of the following information:

an absolute moment or a relative moment corresponding to the positioning measurement quantity, where the absolute moment or the relative moment takes the orthogonal frequency division multiplexing symbol or a sampling value point as the granularity of the measurement moment;
a quality indication of the positioning measurement;
an indication of line of sight or non line of sight.

In some embodiments, the positioning reference signal configuration sending unit 22 is further configured to:

calculate, based on the positioning measurement quantity and by using preset terminal position information at a plurality of different moments in an initial search range, terminal position information of the terminal at the plurality of different moments based on a minimization criterion of a cost function.

In some embodiments, the cost function includes one of the five kinds of cost functions described above, which will not be repeated.

As shown in FIG. 12, on the side of a positioning reference signal sending entity, an embodiment of the present application provides another positioning apparatus, including:

a positioning reference signal configuration negotiation unit 31, configured to negotiate with a positioning management functional entity to determine positioning reference signal configuration information, where the positioning reference signal configuration information is positioning reference signal configuration information for a plurality of positioning reference signal sending entities at a plurality of moments;

a positioning reference signal sending unit 32, configured to send positioning reference signals to a terminal at the plurality of moments, respectively, for the terminal to receive, according to the positioning reference signal configuration information, the positioning reference signals sent at the plurality of moments and perform positioning measurement, where a granularity of a measurement moment is less than or equal to an orthogonal frequency division multiplexing symbol.

In some embodiments, among the positioning reference signal configuration information, positions of time domain resources of positioning reference signals of the plurality of positioning reference signal sending entities at a same moment of the plurality of moments are identical or adjacent or differ in a preset range.

It should be noted that the division of units in the embodiment of the present application is schematic and is only a logical function division, and there may be other division manners in actual implementations. In addition, the functional units in the embodiments of the present application may be integrated into one processing unit, or each unit may physically exist alone, or two or more units may be integrated into one unit. The above-integrated units can be realized either in the form of hardware or in the form of software functional units.

The integrated units may be stored in a computer-readable storage medium if being implemented in the form of software functional units and sold or used as an independent product. Based on this understanding, the essence of the technical solution of the present application, or the part that contributes to the prior art, or all or a part of this technical solution may be embodied in a form of a software product. The computer software product is stored in a storage medium and includes several instructions to cause a computer device (which may be a personal computer, a server, or a network device, etc.) or a processor (processor) to perform all or part of the steps of the methods described in various embodiments of the present application. The above storage medium includes various media that can store a program code, such as: a USB flash drive, a removable hard disk, a read-only memory (Read-Only Memory, ROM), a random access memory (Random Access Memory, RAM), a magnetic disk or an optical disk.

It should be noted here that the above apparatus provided by the embodiment of the present application can implement all the method steps implemented by the above method embodiments, and can achieve the same technical effects, therefore, the parts of this embodiment that are the same as the method embodiments and the beneficial effects thereof will not be specifically detailed here.

An embodiment of the present application also provides a processor-readable storage medium, where the processor-readable storage medium stores a computer program, and the computer program is used to cause a processor to execute any of the methods provided by the embodiments of the present application described above.

The processor-readable storage medium may be any available medium or data storage device that the processor is able to access, including, but not limited to, a magnetic memory (e.g., a floppy disk, a hard disk, a magnetic tape, a magneto-optical disk (MO), etc.), an optical memory (e.g., a CD, a DVD, a BD, a HVD, etc.), and a semiconductor memory (e.g., a ROM, an EPROM, an EEPROM, a non-volatile memory (NAND FLASH), a solid-state drive (SSD)), etc.

An embodiment of the present application further provides a computer program product or a computer program, where the computer program product or the computer program includes computer instructions, and the computer instructions are stored in a computer-readable storage medium. A processor of a computer device reads the computer instructions from the computer-readable storage medium, and the processor executes the computer instructions, so that the computer device performs any one of the methods described in the above embodiments. The program product may use any combination of one or more readable media. The readable medium may be a readable signal medium or a readable storage medium. The readable storage medium may be, for example, but not limited to, an electrical, a magnetic, an optical, an electromagnetic, an infrared, or a semiconductor system, apparatus, or device, or any combination of the above. More specific examples (a non-exhaustive list) of the readable storage medium include, an electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

It should be understood that:

the access technology through which entities in a communication network transmit traffic therebetween may be any suitable current or future technology, such as WLAN (Wireless Local Access Network), WiMAX (Worldwide Interoperability for Microwave Access), LTE, LTE-A, 5G, Bluetooth, infrared, etc. In addition, the embodiments may also apply a wired technology, for example, a IP-based access technology, such as a wired network or a fixed line.

Embodiments suitable for being implemented as a software code or a part thereof and running using a processor or a processing function are independent of the software code and may be specified using any known or future developed programming language, such as a high-level programming language, such as objective-C, C, C++, C#, Java, Python, Javascript, other scripting languages, etc., or a low-level programming language such as a machine language or an assembler.

The implementation of the embodiments is independent of hardware and may be implemented using any known or future-developed hardware technology or any mixture thereof, such as a microprocessor or a CPU (Central Processing Unit), an MOS (Metal Oxide Semiconductor), a CMOS (Complementary MOS), a BiMOS (Bipolar MOS), a BiCMOS (Bipolar CMOS), an ECL (Emitter Coupled Logic) and/or a TTL (Transistor-Transistor Logic).

The embodiments may be implemented as separate devices, apparatuses, units, components or functions, or in a distributed manner. For example, one or more processors or processing functions may be used or shared in processing, or one or more processing segments or processing parts may be used and shared in processing, where one physical processor or more than one physical processor may be used to implement one or more processing parts dedicated to specific processing as described.

The apparatus may be implemented by a semiconductor chip, a chipset or a (hardware) module including such chip or chipset.

The embodiments may also be implemented as any combination of hardware and software, such as ASIC (Application Specific IC (Integrated Circuit)) components, FPGA (Field Programmable Gate Array) or CPLD (Complex Programmable Logic Device) components or DSP (Digital Signal Processor) components.

The embodiments may also be implemented as a computer program product, including a computer-usable medium in which a computer-readable program code is embodied, and the computer-readable program code is adapted to perform the process as described in the embodiments, where the computer-usable medium may be a non-transitory medium.

It should be understood by those skilled in the art that the embodiments of the present application may be provided as a method, a system, or a computer program product. Therefore, the present application can take a form of an entire hardware embodiment, an entire software embodiment, or an embodiment combining software and hardware aspects. Moreover, the present application may take a form of a computer program product implemented in one or more computer-usable storage media (including but not limited to a magnetic disk memory and an optical memory, etc.) that contain computer-usable program codes therein.

The present application is described with reference to flowcharts and/or block diagrams of the methods, the apparatuses (systems), and the computer program products according to the embodiments of the present application. It should be understood that each flow and/or block in the flowcharts and/or the block diagrams, and combinations of the flows and/or the blocks in the flowcharts and/or the block diagrams can be implemented by computer program instructions. These computer program instructions may be provided to a processor of a general-purpose computer, a special-purpose computer, an embedded processor or other programmable data processing devices to produce a machine, such that the instructions executed by the processor of the computer or the other programmable data processing devices produce an apparatus for implementing the functions specified in one or more flows of the flowcharts and/or one or more blocks of the block diagrams.

These computer program instructions may also be stored in a computer-readable memory that can direct a computer or other programmable data processing devices to function in a particular manner, such that the instructions stored in the computer-readable memory produce an article of manufacture including an instruction apparatus that implements the functions specified in one or more flows of the flowcharts and/or one or more blocks of the block diagrams.

These computer program instructions may also be loaded into a computer or other programmable data processing devices, such that a series of operational steps are performed in the computer or other programmable devices to produce computer-implemented processing, such that the instructions executed in the computer or other programmable devices provide steps for implementing the functions specified in one or more flows of the flowcharts and/or one or more blocks of the block diagrams.

Obviously, those skilled in the art can make various modifications and variations to the present application without departing from the spirit and scope of the present application. Thus, if these modifications and variations of the present application are within the scope of the claims of the present application and their technical equivalents, the present application is also intended to include such modifications and variations.

**Claims**

1. A positioning method, comprising:

    acquiring positioning reference signal configuration information, wherein the positioning reference signal configuration information is positioning reference signal configuration information for a plurality of positioning reference signal sending entities at a plurality of moments;
    receiving, according to the positioning reference signal configuration information, positioning reference signals sent by the plurality of positioning reference signal sending entities at the plurality of moments, and performing positioning measurement, wherein a granularity of a measurement moment is less than or equal to an orthogonal frequency division multiplexing symbol.

2. The method according to claim 1, wherein the method further comprises:
   reporting a positioning capability of a terminal, wherein the positioning capability of the terminal comprises one or a combination of the following information:

    a type of positioning measurement quantity supported by the terminal; wherein the type comprises a phase of arrival and/or time of arrival;
    historical speed information of the terminal;
    whether the terminal supports positioning measurement for one measurement sample.

3. The method according to claim 1, wherein the performing the positioning measurement comprises:

    determining a number M of measurement sample, wherein the measurement sample is used to acquire positioning measurement quantity, M is an integer greater than or equal to 1;
    acquiring positioning measurement quantity based on the M measurement sample.

4. The method according to claim 3, wherein the determining the number M of the measurement sample comprises:

    receiving indication information, wherein the indication information is used to indicate a value of the number M of the measurement sample;
    or, receiving indication information, wherein the indication information is used to indicate information for determining a value of the number M of the measurement sample, and determining the value of the number M of the measurement sample according to the indication information.

5. The method according to claim 4, wherein in case that a speed of the terminal is greater than a preset value, the value of the number M of the measurement sample is 1.

6. The method according to claim 1, wherein the method further comprises:

    sending positioning measurement quantity and measurement quality indication information; wherein,
    the positioning measurement quantity comprises positioning measurement quantity of one or a combination of the following four types:

    single differential time of arrival, single differential phase of arrival, double differential time of arrival and double differential phase of arrival;
    the measurement quality indication information comprises one or a combination of the following information:

    an absolute moment or a relative moment corresponding to the positioning measurement quantity, wherein the absolute moment or the relative moment takes the orthogonal frequency division multiplexing symbol or a sampling value point as the granularity of the measurement moment;
    a quality indication of the positioning measurement;
    an indication of line of sight or non line of sight.

7. The method according to claim 1, wherein the method further comprises: obtaining, based on the positioning measurement, measurement quantity of differential time of arrival (TOA) and/or measurement quantity of differential phase of arrival (POA); calculating, by using preset terminal position information at a plurality of different moments and based on a minimization criterion of a cost function, terminal position information of a terminal at the plurality of different moments;

wherein the differential TOA comprises single differential TOA and double differential TOA;
wherein the measurement quantity of the differential POA comprises a single differential POA and a double differential POA.

8. The method according to claim 7, wherein the cost function comprises one of the following five kinds of cost functions:

a first kind of cost function: calculating, by using preset terminal positions at the plurality of different moments, a theoretical double differential TOA value, which comprises calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities; wherein, $j = \{1: N\}$, $j \neq p$, N represents a total number of positioning reference signal sending entities; calculating a weighted sum of squares of differential values between the theoretical double differential TOA value and a double differential TOA value obtained by an actual measurement of the terminal; wherein an inverse of a weighting coefficient is a variance of a TOA measurement error, and the TOA measurement error is a preset value or is notified by the network to the terminal according to a current scene;

a second kind of cost function:, calculating, by using preset terminal positions at the plurality of different moments, a theoretical single differential TOA value, which comprises calculating a theoretical single differential TOA of the terminal to any non-reference positioning reference signal sending entity j of the plurality of positioning reference signal sending entities; wherein, $j = \{1: N\}$, N represents a total number of positioning reference signal sending entities;
calculating a weighted sum of squares of differential values between the theoretical single differential TOA value and a single differential TOA value obtained by an actual measurement of the terminal; wherein an inverse of a weighting coefficient is a variance of a TOA measurement error, and the TOA measurement error is a preset value or is notified by the network to the terminal according to a current scene;

a third kind of cost function: calculating, by using preset terminal positions at the plurality of different moments, a theoretical double differential POA value, which comprises calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities; wherein, $j = \{1: N\}$, $j \neq p$, N represents a total number of positioning reference signal sending entities; calculating a weighted sum of squares of differential values between the theoretical double differential POA value and a double differential POA value obtained by an actual measurement of the terminal; wherein an inverse of a weighting coefficient is a variance of a POA measurement error, and the POA measurement error is a preset value or is notified by the network to the terminal according to a current scene;

a fourth kind of cost function: calculating, by using preset terminal positions at the plurality of different moments, a theoretical single differential POA value, which comprises calculating a theoretical single differential POA of the terminal to any non-reference positioning reference signal sending entity j of the plurality of positioning reference signal sending entities; wherein, $j = \{1: N\}$, N represents a total number of positioning reference signal sending entities;
calculating a weighted sum of squares of differential values between the theoretical single differential POA value and a single differential POA value obtained by an actual measurement of the terminal; wherein an inverse of a weighting coefficient is a variance of a POA measurement error, and the POA measurement error is a preset value or is notified by the network to the terminal according to a current scene;

a fifth kind of cost function: calculating, by using preset terminal positions at the plurality of different moments, a first weighted value of squares of differential values between a theoretical double differential TOA value and a double differential TOA value obtained by an actual measurement of the terminal; wherein an inverse of a weighting coefficient is a variance of a TOA measurement error, and the TOA measurement error is a preset value or is notified by the network to the terminal according to a current scene;
and calculating, by using preset terminal positions at the plurality of different moments, a second weighted value of squares of difference values between a theoretical double differential POA value and a double differential POA value obtained by the actual measurement of the terminal; wherein an inverse of a weighting coefficient is a variance of a POA measurement error, and the POA measurement error is a preset value or is notified by the network to the terminal according to a current scene;
and calculating an accumulated sum of the first weighted value of squares and the second weighted value of squares;

wherein the calculating the theoretical double differential TOA value comprises: calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities;

the calculating the theoretical double differential POA value comprises: calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities;

wherein, j = {1: N}, j ≠ p, N represents a total number of positioning reference signal sending entities.

9. A positioning method, comprising:

negotiating with a plurality of positioning reference signal sending entities to determine positioning reference signal configuration information, wherein the positioning reference signal configuration information is positioning reference signal configuration information for the plurality of positioning reference signal sending entities at a plurality of moments;

sending the positioning reference signal configuration information for a terminal to receive, according to the positioning reference signal configuration information, positioning reference signals sent by the plurality of positioning reference signal sending entities at the plurality of moments and perform positioning measurement, wherein a granularity of a measurement moment is less than or equal to an orthogonal frequency division multiplexing symbol.

10. The method according to claim 9, wherein the method further comprises:
receiving a positioning capability of a terminal, wherein the positioning capability comprises one or a combination of the following information:

a type of positioning measurement quantity supported by the terminal; wherein the type comprises a phase of arrival and/or time of arrival;
historical speed information of the terminal;
whether the terminal supports positioning measurement for one measurement sample.

11. The method according to claim 10, wherein among the positioning reference signal configuration information, positions of time domain resources of positioning reference signals of the plurality of positioning reference signal sending entities at a same moment of the plurality of moments are identical or adjacent or differ in a preset range.

12. The method according to claim 9, wherein the method further comprises:
sending indication information, wherein the indication information indicates a value of a number M of a measurement sample, or the indication information indicates information for determining the value of the number M of the measurement sample.

13. The method according to claim 12, wherein in case that a speed of the terminal is greater than a preset value, the value of the number M of the measurement sample is 1.

14. The method according to claim 9, wherein the method further comprises:

receiving positioning measurement quantity and measurement quality indication information sent by the terminal; wherein,
the positioning measurement quantity comprises positioning measurement quantity of one or a combination of the following four types:

single differential time of arrival, single differential phase of arrival, double differential time of arrival and double differential phase of arrival;
the measurement quality indication information comprises one or a combination of the following information:

an absolute moment or a relative moment corresponding to the positioning measurement quantity, wherein the absolute moment or the relative moment takes the orthogonal frequency division multiplexing symbol or a sampling value point as the granularity of the measurement moment;
a quality indication of the positioning measurement;
an indication of line of sight or non line of sight.

15. The method according to claim 13, wherein the method further comprises:
calculating, based on the positioning measurement quantity and by using preset terminal position information at a plurality of different moments in an initial search range, terminal position information of the terminal at the plurality of different moments based on a minimization criterion of a cost function.

16. The method according to claim 15, wherein the cost function comprises one of the following five kinds of cost functions:

a first kind of cost function: calculating, by using preset terminal positions at the plurality of different moments, a theoretical double differential TOA value, which comprises calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities; wherein, j = {1: N}, j $\neq$ p, N represents a total number of positioning reference signal sending entities; calculating a weighted sum of squares of differential values between the theoretical double differential TOA value and a double differential TOA value obtained by an actual measurement of the terminal; wherein an inverse of a weighting coefficient is a variance of a TOA measurement error, and the TOA measurement error is a preset value or is notified by the network to the terminal according to a current scene;
a second kind of cost function:, calculating, by using preset terminal positions at the plurality of different moments, a theoretical single differential TOA value, which comprises calculating a theoretical single differential TOA of the terminal to any non-reference positioning reference signal sending entity j of the plurality of positioning reference signal sending entities; wherein, j = {1: N}, N represents a total number of positioning reference signal sending entities;
calculating a weighted sum of squares of differential values between the theoretical single differential TOA value and a single differential TOA value obtained by an actual measurement of the terminal; wherein an inverse of a weighting coefficient is a variance of a TOA measurement error, and the TOA measurement error is a preset value or is notified by the network to the terminal according to a current scene;
a third kind of cost function: calculating, by using preset terminal positions at the plurality of different moments, a theoretical double differential POA value, which comprises calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities; wherein, j = {1: N}, j $\neq$ p, N represents a total number of positioning reference signal sending entities; calculating a weighted sum of squares of differential values between the theoretical double differential POA value and a double differential POA value obtained by an actual measurement of the terminal; wherein an inverse of a weighting coefficient is a variance of a POA measurement error, and the POA measurement error is a preset value or is notified by the network to the terminal according to a current scene;
a fourth kind of cost function: calculating, by using preset terminal positions at the plurality of different moments, a theoretical single differential POA value, which comprises calculating a theoretical single differential POA of the terminal to any non-reference positioning reference signal sending entity j of the plurality of positioning reference signal sending entities; wherein, j = {1: N}, N represents a total number of positioning reference signal sending entities;
calculating a weighted sum of squares of differential values between the theoretical single differential POA value and a single differential POA value obtained by an actual measurement of the terminal; wherein an inverse of a weighting coefficient is a variance of a POA measurement error, and the POA measurement error is a preset value or is notified by the network to the terminal according to a current scene;
a fifth kind of cost function: calculating, by using preset terminal positions at the plurality of different moments, a first weighted value of squares of differential values between a theoretical double differential TOA value and a double differential TOA value obtained by an actual measurement of the terminal; wherein an inverse of a weighting coefficient is a variance of a TOA measurement error, and the TOA measurement error is a preset value or is notified by the network to the terminal according to a current scene;
and calculating, by using preset terminal positions at the plurality of different moments, a second weighted value of squares of differential values between a theoretical double differential POA value and a double differential POA value obtained by the actual measurement of the terminal; wherein an inverse of a weighting coefficient is a variance of a POA measurement error, and the POA measurement error is a preset value or is notified by the network to the terminal according to a current scene;

and calculating an accumulated sum of the first weighted value of squares and the second weighted value of squares;

wherein the calculating the theoretical double differential TOA value comprises: calculating a differential value between a theoretical single differential TOA of the terminal to any non-reference positioning reference signal sending entity j of the plurality of positioning reference signal sending entities and a theoretical single differential TOA of the terminal to a reference positioning reference signal sending entity p of the plurality of positioning reference signal sending entities;

the calculating the theoretical double differential POA value comprises: calculating a differential value between a theoretical single differential POA of the terminal to any non-reference positioning reference signal sending entity j of the plurality of positioning reference signal sending entities and a theoretical single differential POA of the terminal to a reference positioning reference signal sending entity p of the plurality of positioning reference signal sending entities;

wherein, $j = \{1: N\}$, $j \neq p$, N represents a total number of positioning reference signal sending entities.

17. A positioning method, comprising:

negotiating with a positioning management functional entity to determine positioning reference signal configuration information, wherein the positioning reference signal configuration information is positioning reference signal configuration information for a plurality of positioning reference signal sending entities at a plurality of moments;

sending positioning reference signals to a terminal at the plurality of moments, respectively, for the terminal to receive, according to the positioning reference signal configuration information, the positioning reference signals sent at the plurality of moments and perform positioning measurement, wherein a granularity of a measurement moment is less than or equal to an orthogonal frequency division multiplexing symbol.

18. The method according to claim 17, wherein among the positioning reference signal configuration information, positions of time domain resources of positioning reference signals of the plurality of positioning reference signal sending entities at a same moment of the plurality of moments are identical or adjacent or differ in a preset range.

19. A positioning apparatus, comprising a memory, a transceiver and a processor:
wherein the memory is configured to store a computer program; the transceiver is configured to transmit and receive data under control of the processor; the processor is configured to read the computer program in the memory and perform the following operations:

acquiring positioning reference signal configuration information, wherein the positioning reference signal configuration information is positioning reference signal configuration information for a plurality of positioning reference signal sending entities at a plurality of moments;

receiving, according to the positioning reference signal configuration information, positioning reference signals sent by the plurality of positioning reference signal sending entities at the plurality of moments, and performing positioning measurement, wherein a granularity of a measurement moment is less than or equal to an orthogonal frequency division multiplexing symbol.

20. The apparatus according to claim 19, wherein the processor is further configured to read the computer program in the memory and perform the following operations:
reporting a positioning capability of a terminal, wherein the positioning capability of the terminal comprises one or a combination of the following information:

a type of positioning measurement quantity supported by the terminal; wherein the type comprises a phase of arrival and/or time of arrival;

historical speed information of the terminal;

whether the terminal supports positioning measurement for one measurement sample.

21. The apparatus according to claim 19, wherein the performing the positioning measurement comprises:

determining a number M of measurement sample, wherein the measurement sample is used to acquire positioning measurement quantity, M is an integer greater than or equal to 1;

acquiring positioning measurement quantity based on the M measurement sample.

22. The apparatus according to claim 21, wherein the determining the number M of the measurement sample comprises:

receiving indication information, wherein the indication information is used to indicate a value of the number M of the measurement sample;
or, receiving indication information, wherein the indication information is used to indicate information for determining a value of the number M of the measurement sample, and determining the value of the number M of the measurement sample according to the indication information.

23. The apparatus according to claim 22, wherein in case that a speed of the terminal is greater than a preset value, the value of the number M of the measurement sample is 1.

24. The apparatus according to claim 19, wherein the processor is further configured to read the computer program in the memory and perform the following operations:

sending positioning measurement quantity and measurement quality indication information; wherein,
the positioning measurement quantity comprises positioning measurement quantity of one or a combination of the following four types:

single differential time of arrival, single differential phase of arrival, double differential time of arrival and double differential phase of arrival;
the measurement quality indication information comprises one or a combination of the following information:

an absolute moment or a relative moment corresponding to the positioning measurement quantity, wherein the absolute moment or the relative moment takes the orthogonal frequency division multiplexing symbol or a sampling value point as the granularity of the measurement moment;
a quality indication of the positioning measurement;
an indication of line of sight or non line of sight.

25. The apparatus according to claim 19, wherein the processor is further configured to read the computer program in the memory and perform the following operations:

obtaining, based on the positioning measurement, measurement quantity of differential time of arrival (TOA) and/or measurement quantity of differential phase of arrival (POA); calculating, by using preset terminal position information at a plurality of different moments in an initial search range and based on a minimization criterion of a cost function, terminal position information of a terminal at the plurality of different moments;
wherein the differential TOA comprises single differential TOA and double differential TOA;
wherein the measurement quantity of the differential POA comprises a single differential POA and a double differential POA.

26. A positioning apparatus, comprising a memory, a transceiver and a processor:
wherein the memory is configured to store a computer program; the transceiver is configured to transmit and receive data under control of the processor; the processor is configured to read the computer program in the memory and perform the following operations:

negotiating with a plurality of positioning reference signal sending entities to determine positioning reference signal configuration information, wherein the positioning reference signal configuration information is positioning reference signal configuration information for the plurality of positioning reference signal sending entities at a plurality of moments;
sending the positioning reference signal configuration information for a terminal to receive, according to the positioning reference signal configuration information, positioning reference signals sent by the plurality of positioning reference signal sending entities at the plurality of moments and perform positioning measurement, wherein a granularity of a measurement moment is less than or equal to an orthogonal frequency division multiplexing symbol.

27. The apparatus according to claim 26, wherein the processor is further configured to read the computer program in the memory and perform the following operations:
receiving a positioning capability of a terminal, wherein the positioning capability comprises one or a combination of the following information:

a type of positioning measurement quantity supported by the terminal; wherein the type comprises a phase of arrival and/or time of arrival;

historical speed information of the terminal;

whether the terminal supports positioning measurement for one measurement sample.

28. The apparatus according to claim 26, wherein among the positioning reference signal configuration information, positions of time domain resources of positioning reference signals of the plurality of positioning reference signal sending entities at a same moment of the plurality of moments are identical or adjacent or differ in a preset range.

29. The apparatus according to claim 26, wherein the processor is further configured to read the computer program in the memory and perform the following operations:

sending indication information, wherein the indication information indicates a value of a number M of measurement sample, or the indication information indicates information for determining the value of the number M of the measurement sample.

30. The apparatus according to claim 26, wherein the processor is further configured to read the computer program in the memory and perform the following operations:

receiving positioning measurement quantity and measurement quality indication information sent by the terminal; wherein,

the positioning measurement quantity comprises positioning measurement quantity of one or a combination of the following four types:

single differential time of arrival, single differential phase of arrival, double differential time of arrival and double differential phase of arrival;

the measurement quality indication information comprises one or a combination of the following information:

an absolute moment or a relative moment corresponding to the positioning measurement quantity, wherein the absolute moment or the relative moment takes the orthogonal frequency division multiplexing symbol or a sampling value point as the granularity of the measurement moment;

a quality indication of the positioning measurement;

an indication of line of sight or non line of sight.

31. The apparatus according to claim 30, wherein the processor is further configured to read the computer program in the memory and perform the following operations:

calculating, based on the positioning measurement quantity and by using preset terminal position information at a plurality of different moments in an initial search range, terminal position information of the terminal at the plurality of different moments based on a minimization criterion of a cost function.

32. A positioning apparatus, comprising a memory, a transceiver and a processor:

wherein the memory is configured to store a computer program; the transceiver is configured to transmit and receive data under control of the processor; the processor is configured to read the computer program in the memory and perform the following operations:

negotiating with a positioning management functional entity to determine positioning reference signal configuration information, wherein the positioning reference signal configuration information is positioning reference signal configuration information for a plurality of positioning reference signal sending entities at a plurality of moments;

sending positioning reference signals to a terminal at the plurality of moments, respectively, for the terminal to receive, according to the positioning reference signal configuration information, the positioning reference signals sent at the plurality of moments and perform positioning measurement, wherein a granularity of a measurement moment is less than or equal to an orthogonal frequency division multiplexing symbol.

33. The apparatus according to claim 32, wherein among the positioning reference signal configuration information, positions of time domain resources of positioning reference signals of the plurality of positioning reference signal sending entities at a same moment of the plurality of moments are identical or adjacent or differ in a preset range.

34. A positioning apparatus, comprising:

an acquisition positioning reference signal configuration unit, configured to acquire positioning reference signal configuration information, wherein the positioning reference signal configuration information is positioning reference signal configuration information for a plurality of positioning reference signal sending entities at a plurality of moments;

a positioning measurement unit, configured to receive, according to the positioning reference signal configuration information, positioning reference signals sent by the plurality of positioning reference signal sending entities at the plurality of moments, and perform positioning measurement, wherein a granularity of a measurement moment is less than or equal to an orthogonal frequency division multiplexing symbol.

35. The apparatus according to claim 34, wherein the acquisition positioning reference signal configuration unit is further configured to:

report a positioning capability of a terminal, wherein the positioning capability of the terminal comprises one or a combination of the following information:

a type of positioning measurement quantity supported by the terminal; wherein the type comprises a phase of arrival and/or time of arrival;
historical speed information of the terminal estimated and stored by the terminal;
whether the terminal supports positioning measurement for one measurement sample.

36. The apparatus according to claim 34, wherein the performing the positioning measurement comprises:

determining a number M of measurement sample, wherein the measurement sample is used to acquire positioning measurement quantity, M is an integer greater than or equal to 1;
acquiring positioning measurement quantity based on the M measurement sample;
wherein the determining the number M of the measurement sample comprises:

receiving indication information, wherein the indication information is used to indicate a value of the number M of the measurement sample;
or, receiving indication information, wherein the indication information is used to indicate information for determining a value of the number M of the measurement sample, and determining the value of the number M of the measurement sample according to the indication information.

37. The apparatus according to claim 36, wherein in case that a speed of the terminal is greater than a preset value, the value of the number M of the measurement sample is 1.

38. The apparatus according to claim 37, wherein the positioning measurement unit is further configured to:

send positioning measurement quantity and measurement quality indication information; wherein,
the positioning measurement quantity comprises positioning measurement quantity of one or a combination of the following four types:

single differential time of arrival, single differential phase of arrival, double differential time of arrival and double differential phase of arrival;
the measurement quality indication information comprises one or a combination of the following information:

an absolute moment or a relative moment corresponding to the positioning measurement quantity, wherein the absolute moment or the relative moment takes the orthogonal frequency division multiplexing symbol or a sampling value point as the granularity of the measurement moment;
a quality indication of the positioning measurement;
an indication of line of sight or non line of sight.

39. The apparatus according to claim 34, wherein the positioning measurement unit is further configured to: obtain, based on the positioning measurement, measurement quantity of differential time of arrival (TOA) and/or measurement quantity of differential phase of arrival (POA); calculate, by using preset terminal position information at a plurality of different moments in an initial search range and based on a minimization criterion of a cost function, terminal position information of a terminal at the plurality of different moments;

wherein the differential TOA comprises single differential TOA and double differential TOA;

wherein the measurement quantity of the differential POA comprises a single differential POA and a double differential POA.

40. A positioning apparatus, comprising:

a positioning reference signal configuration negotiation unit, configured to negotiate with a plurality of positioning reference signal sending entities to determine positioning reference signal configuration information, wherein the positioning reference signal configuration information is positioning reference signal configuration information for the plurality of positioning reference signal sending entities at a plurality of moments;
a positioning reference signal configuration sending unit, configured to send the positioning reference signal configuration information for a terminal to receive, according to the positioning reference signal configuration information, positioning reference signals sent by the plurality of positioning reference signal sending entities at the plurality of moments and perform positioning measurement, wherein a granularity of a measurement moment is less than or equal to an orthogonal frequency division multiplexing symbol.

41. The apparatus according to claim 40, wherein the positioning reference signal configuration negotiation unit is further configured to:
receive a positioning capability of a terminal, wherein the positioning capability comprises one or a combination of the following information:

a type of positioning measurement quantity supported by the terminal; wherein the type comprises a phase of arrival and/or time of arrival;
historical speed information of the terminal;
whether the terminal supports positioning measurement for one measurement sample.

42. The apparatus according to claim 41, wherein among the positioning reference signal configuration information, positions of time domain resources of positioning reference signals of the plurality of positioning reference signal sending entities at a same moment of the plurality of moments are identical or adjacent or differ in a preset range.

43. The apparatus according to claim 40, wherein the positioning reference signal configuration sending unit is further configured to:
send indication information, wherein the indication information indicates a value of a number M of measurement sample, or the indication information indicates information for determining the value of the number M of the measurement sample.

44. The apparatus according to claim 43, wherein in case that a speed of the terminal is greater than a preset value, the value of the number M of the measurement sample is 1.

45. The apparatus according to claim 40, wherein the positioning reference signal configuration sending unit is further configured to:

receive positioning measurement quantity and measurement quality indication information sent by the terminal; wherein,
the positioning measurement quantity comprises positioning measurement quantity of one or a combination of the following four types:

single differential time of arrival, single differential phase of arrival, double differential time of arrival and double differential phase of arrival;
the measurement quality indication information comprises one or a combination of the following information:

an absolute moment or a relative moment corresponding to the positioning measurement quantity, wherein the absolute moment or the relative moment takes the orthogonal frequency division multiplexing symbol or a sampling value point as the granularity of the measurement moment;
a quality indication of the positioning measurement;
an indication of line of sight or non line of sight.

46. The apparatus according to claim 44, wherein the positioning reference signal configuration sending unit is further configured to:

calculate, based on the positioning measurement quantity and by using preset terminal position information at a plurality of different moments in an initial search range, terminal position information of the terminal at the plurality of different moments based on a minimization criterion of a cost function.

47. A positioning apparatus, comprising:

a positioning reference signal configuration negotiation unit, configured to negotiate with a positioning management functional entity to determine positioning reference signal configuration information, wherein the positioning reference signal configuration information is positioning reference signal configuration information for a plurality of positioning reference signal sending entities at a plurality of moments;
a positioning reference signal sending unit, configured to send positioning reference signals to a terminal at the plurality of moments, respectively, for the terminal to receive, according to the positioning reference signal configuration information, the positioning reference signals sent at the plurality of moments and perform positioning measurement, wherein a granularity of a measurement moment is less than or equal to an orthogonal frequency division multiplexing symbol.

48. The apparatus according to claim 47, wherein among the positioning reference signal configuration information, positions of time domain resources of positioning reference signals of the plurality of positioning reference signal sending entities at a same moment of the plurality of moments are identical or adjacent or differ in a preset range.

49. A processor-readable storage medium, wherein the processor-readable storage medium stores a computer program, and the computer program is configured to cause the processor to perform the method according to any one of claims 1 to 18.

$$RTT = (\Delta T_1 + \Delta T_2)$$
$$= (t_{UE}^{Rx} - t_{TRP}^{Tx}) + (t_{TRP}^{Rx} - t_{UE}^{Tx})$$
$$= (t_{UE}^{Rx} - t_{UE}^{Tx}) + (t_{TRP}^{Rx} - t_{TRP}^{Tx})$$

FIG. 1

PRS sending entity 1
(Base station/TRP/RSU)

PRS sending entity j
(Base station/TRP/RSU)

PRS receiving entity
(target UE)

T1

T2

PRS sending entity p
(Base station/TRP/RSU)

FIG. 2

FIG. 3

PRS sending entity j
(Base station/TRP/RSU)

$\text{Dis}\big[\text{Loc}\big(UE(x_1,y_1)\big),\text{Loc}(\text{Txj})\big]$

$\text{Dis}\big[\text{Loc}\big(UE(x_2,y_2)\big),\text{Loc}(\text{Txj})\big]$

PRS receiving
entity (target UE)

T1

T2

$\text{Dis}\big[\text{Loc}\big(UE(x_1,y_1)\big),\text{Loc}(\text{Txp})\big]$

$\text{Dis}\big[\text{Loc}\big(UE(x_2,y_2)\big),\text{Loc}(\text{Txp})\big]$

PRS sending entity p
(Base station/TRP/RSU)

FIG. 4

Acquiring positioning reference signal configuration information, where the positioning reference signal configuration information is positioning reference signal configuration information for a plurality of positioning reference signal sending entities at a plurality of moments

S101

Receiving, according to the positioning reference signal configuration information, positioning reference signals sent by the positioning reference signal sending entities at the plurality of moments, and performing a positioning measurement, where a granularity of measurement moment is less than or equal to an orthogonal frequency division multiplexing symbol

S102

FIG. 5

| |
|---|
| Negotiating with a plurality of positioning reference signal sending entities to determine positioning reference signal configuration information, where the positioning reference signal configuration information is positioning reference signal configuration information for the plurality of positioning reference signal sending entities at a plurality of moments |

S201

| |
|---|
| Sending the positioning reference signal configuration information for a terminal to receive, according to the positioning reference signal configuration information for the plurality of positioning reference signal sending entities at the plurality of moments, positioning reference signals sent by the positioning reference signal sending entities at the plurality of moments and perform positioning measurement, where a granularity of a measurement moment is less than or equal to an orthogonal frequency division multiplexing symbol |

S202

FIG. 6

Negotiating with a positioning management functional entity to determine positioning reference signal configuration information, where the positioning reference signal configuration information is positioning reference signal configuration information for a plurality of positioning reference signal sending entities at a plurality of moments

S301

Sending positioning reference signals to a terminal at the plurality of moments, respectively, for the terminal to receive, according to the positioning reference signal configuration information for the plurality of positioning reference signal sending entities at the plurality of moments, the positioning reference signals sent at the plurality of moments and perform positioning measurement, where a granularity of a measurement moment is less than or equal to an orthogonal frequency division multiplexing symbol

S302

FIG. 7

600

Processor

620

Memory

Bus interface

610

Transceiver

630

User interface

FIG. 8

~ 500

Processor ⟺ Bus interface ⟺ Transceiver

~ 510

~ 520

Memory ⟺

FIG. 9

Acquisition positioning reference signal configuration unit ~ 11

Positioning measurement unit ~ 12

FIG. 10

Positioning reference signal configuration negotiation unit ~ 21

Positioning reference signal configuration sending unit ~ 22

FIG. 11

Positioning reference signal configuration negotiation unit ~ 31

Positioning reference signal sending unit ~ 32

FIG. 12

## INTERNATIONAL SEARCH REPORT

| International application No. |
|---|
| **PCT/CN2023/116321** |

**A. CLASSIFICATION OF SUBJECT MATTER**

H04W64/00(2009.01)i

According to International Patent Classification (IPC) or to both national classification and IPC

**B. FIELDS SEARCHED**

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNTXT, DWPI, ENTXT, ENTXTC, 3GPP: 定位, 位置, 参考信号, RS, PRS, 测量, 配置, 参数, 实体, NB, BS, 基站, TRP, 收发点, RSU, LMF, 协商, 请求, 响应, 多, 联合, 小于, 符号, OFDM, 粒度, 周期, 间隔, 样本, 质量, 代价函数, 高速, 快速, 移动, 多普勒, 频移, position, location, reference signal, measure, configuration, parameter, entity, consult, negotiation, request, respond, multi, joint, smaller, lower, less, symbol, size, grain, quality, cost, loss, function, high speed, fast, move, doppler, FO, frequency offset

**C. DOCUMENTS CONSIDERED TO BE RELEVANT**

| Category* | Citation of document, with indication, where appropriate, of the relevant passages | Relevant to claim No. |
|---|---|---|
| Y | US 2022120841 A1 (QUALCOMM INC.) 21 April 2022 (2022-04-21) description, paragraphs [0101]-[0109], and figure 8 | 1-4, 9-12, 17-22, 26-29, 32-36, 40-43, 47-49 |
| Y | US 2021328737 A1 (QUALCOMM INC.) 21 October 2021 (2021-10-21) description, paragraphs [0141]-[0144] | 1-4, 9-12, 17-22, 26-29, 32-36, 40-43, 47-49 |
| A | WO 2021000872 A1 (DATANG MOBILE COMMUNICATIONS EQUIPMENT CO., LTD.) 07 January 2021 (2021-01-07) entire document | 1-49 |
| A | CN 113939012 A (DATANG MOBILE COMMUNICATIONS EQUIPMENT CO., LTD.) 14 January 2022 (2022-01-14) entire document | 1-49 |
| A | HUAWEI et al. "Considerations on DL Procedures for NR Positioning" *3GPP TSG-RAN WG2 Meeting #108, R2-1914980*, 22 November 2019 (2019-11-22), entire document | 1-49 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 November 2023** | **17 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/116321**

| Patent document cited in search report | | | Publication date (day/month/year) | Patent family member(s) | | | Publication date (day/month/year) |
|---|---|---|---|---|---|---|---|
| US | 2022120841 | A1 | 21 April 2022 | WO | 2022081323 | A1 | 21 April 2022 |
| | | | | EP | 4229937 | A1 | 23 August 2023 |
| | | | | TW | 202220461 | A | 16 May 2022 |
| | | | | KR | 20230087468 | A | 16 June 2023 |
| | | | | BR | 112023006525 | A2 | 16 May 2023 |
| | | | | IN | 202347013593 | A | 30 June 2023 |
| US | 2021328737 | A1 | 21 October 2021 | EP | 4136899 | A1 | 22 February 2023 |
| | | | | KR | 20230002322 | A | 05 January 2023 |
| | | | | BR | 112022020062 | A2 | 22 November 2022 |
| | | | | JP | 2023521847 | A | 25 May 2023 |
| | | | | WO | 2021211319 | A1 | 21 October 2021 |
| | | | | IN | 202247048811 | A | 16 September 2022 |
| | | | | CN | 115299126 | A | 04 November 2022 |
| | | | | VN | 92091 | A | 26 December 2022 |
| WO | 2021000872 | A1 | 07 January 2021 | US | 2022416975 | A1 | 29 December 2022 |
| | | | | EP | 3996310 | A1 | 11 May 2022 |
| | | | | CN | 112187423 | A | 05 January 2021 |
| CN | 113939012 | A | 14 January 2022 | WO | 2022001858 | A1 | 06 January 2022 |
| | | | | TW | 202201988 | A | 01 January 2022 |
| | | | | KR | 20230028487 | A | 28 February 2023 |
| | | | | IN | 202327004122 | A | 21 April 2023 |
| | | | | EP | 4175375 | A1 | 03 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211218041